# EUROPEAN PATENT APPLICATION

(11) **EP 1 035 483 A2**
(43) Date of publication of application: **13.09.2000**
(21) Application number: 00302011.2
(22) Date of filing: 13.03.2000
(51) Int. Cl.: G06F 17/30

(54) **Database storage manager utility**

(30) Priority: 12.03.1999 CA 2265434
(71) Applicant: CROSSKEYS SYSTEMS CORPORATION, Kanata Ontario K2K 2W5 (CA)
(72) Inventor: Fallah-Khair, Melody, Kanata, Ontario K2K 2W5 (CA)
(74) Representative: Harding, Richard Patrick

(57) **Abstract**

A Database Storage Manager (DSM) Utility encompasses and enhances Informix database storage management functionality.

## Description

This invention relates to database management, and in particular to a database storage utility.

Managing the number and the size of database spaces is crucial to database applications such as Resolve™ and NWW™. The problem starts with installation and upgrade of these systems when the appropriate number of database spaces have to be sized, created or updated. Each database space has to also be named properly and distinctively.

The problem is aggravated when the system runs out of the database space during its operation. In such cases, usually with the intervention of the application vendor or system administrator, the size and number of database spaces are adjusted to accommodate the space growth and decline.

Most of the above tasks are manual and prone to human error.

Currently, all these tasks involve support teams in different stages, install, upgrade, or on an on-going basis. The current solution available in Resolve, NWW and any other database application (46020 Network Manager) is very primitive and needs operator's intervention. It requires that a person perform at least the following tasks when an install, upgrade, or database space update is required:
- estimate the new size of each database space based on a series of application defined parameters (# objects, # statistics, # days...)
- check for available disks and hardware
- create appropriate link files to the disks with appropriate user and group permissions
- add, delete the space to/from the RDBMS (e.g. Informix).

The operator needs to be a database literate person as well.

For installation the installer is either asked about the database size (NWW), or the customer is provided with custom database files (Resolve). In the former case, the customer has to have knowledge of sizing its database space. In the latter, the support needs team to provide custom files to each customer, which costs both time and effort for developing and testing them.

Moreover, the upgrade usually does not maintain the size of database space as it requires accurate database space sizing, and includes lots of manual tasks. During the Resolve and NWW operation, growth in the network or functionality of the application may require additional database space. This situation reveals the same issues as install and upgrade.

An object of the invention is to alleviate the afore-mentioned problems.

According to the present invention, there is provided a Database Storage Manager (DSM) Utility that encompasses and enhances Informix database storage management functionality.

In preferred embodiments the Database Storage Manager (DSM) Utility may have one or more of the following features alone or in combination:

It can provide a well-defined interface to manage database spaces with no required back ground in Database Management System.

It can hide the details pertaining to database spaces and disk management.

It can perform on-the-fly the database space sizing, allocation, de-allocation and update based a series of application (user) defined parameters such as number of network objects in Resolve or NWW.

It can provide a command line interface to its user therefore can be used directly by the operator, or integrated into other systems (e.g. Resolve nightly roll-ups).

Using DSM Utility, Resolve and NWW (any other database application) applications will be able to determine the size and the number of database spaces based on Resolve or NWW specific parameters such as network objects, number of statistics, number of days, on the fly during their install, upgrade or operation.

There will be no need for Resolve database custom files or NWW database sizing questions.

A Resolve or NWW system can be re-sized at any time during its operation to accommodate recent change in its configuration.

The DSM can be regarded as a middle ware utility that interfaces with the application administrator from one end, and Informix RDBMS, and physical disks from the other ends. It provides a Command Line Interface to the application administrator to size, configure, and maintain application database spaces without knowing about the details of the database space, its physical location, and its administration.

The major component in the DSM architecture is DBS Blade. DBS Blade is a module that plugs into the DSM utility and extends its capabilities to do database space sizing and numbering from an application point of view. Each DBS Blade contains the expertise required for calculating the size, and naming an application database space. Moreover, it has the knowledge for determining the number of required application database space. The invention applies to all the database applications that use Informix as their database storage management.

This document describes the detailed functionality of Resolve Database Storage Management utility (DSM) from users' perspective. Resolve Database Storage Management utility is a general tool that empowers an application, e.g. CrossKeys Resolve or NetworkWare, to manage its database spaces with abstracting the details pertaining to the underlying physical disks, and the location of each disk fragments allocated to keep user's data.

The DSM utility enhances the application database space management beyond what Informix can provide. It encompasses Informix functionality in database space management, and enhances it by providing a configurable environment for any application to size, allocate and maintain their database spaces.

DSM Utility enables Resolve to perform or enhance the following tasks:
- Automating the database space sizing required by Resolve base or Resolve resource packages.
- Automating the numeration of database spaces required by Resolve base, Resolve quality of services or Resolve resource packages.
- Providing an easy to use interface for configuring and allocating database disk spaces required for the operation of Resolve base, quality of service and resource packages when licensed appropriately.
- Providing a well-defined interface to Resolve administrator to easily add or remove additional database space during the Resolve operation.
- Providing a well-defined interface to Resolve administrator to easily designate or remove disks to be used for Resolve database storage.

DSM utility will be mainly used during the install or upgrade to Resolve 3.0 for allocating database spaces required for the Resolve operation. It will also be used during the Resolve operation by Resolve Administrator to adjust the database space requirement DSM utility addresses the following problems in Resolve:
- The database space configuration files are custom made for every customer. Sometimes, the files do not meet the customers' real requirements due to communication problems. DSM removes the requirement for creating customized database space configuration files for each customer.
- The production and verification of the custom-made database space configuration files poses problems. The manual generation of the custom files, and the verification of them is time, and resource consuming. Moreover, there is no guarantee for the resource availability at the production or verification time. With DSM, there is no need to plan for or perform such activities.
- As the size of customer's network grows, Resolve will need more database storage to store historical and summarized data. At the moment, the database spaces are increased at the customer site manually and usually after a failure in the operation due to lack of disk space. DSM addresses this problem as well.

The invention will now be described in more detail, by way of example, only with reference to the accompanying drawings, in which:-
Figure 1 shows Informix Database Storage Management;
Figure 2 illustrates the building blocks the DSM utility from user's perspective;
Figure 3 shows the DBS Blade Components;
Figure 4 shows a DBS Blade Group;
Figure 5 shows a DBS blade;
Figure 6 shows the Chunk Horizontal Layout Algorithm on Three Disks; and
Figure 7 shows the Chunk Vertical Layout Algorithm on Three Disks.

The described Database Storage Management (DSM) utility in accordance with the invention provides a well-defined user interface for managing Resolve database spaces, abstracting the details for database disk space allocation from Resolve operator. The Resolve Database Storage Management utility can manage database spaces for applications other than Resolve, for example NWW, with a minimum configuration required.

The DSM utility encompasses and enhances Informix capability in managing database spaces. This section provides an overview of Informix database space management. The terminology, and semantics introduced in this section are fundamental to the operation of DSM utility, and will be used throughout.

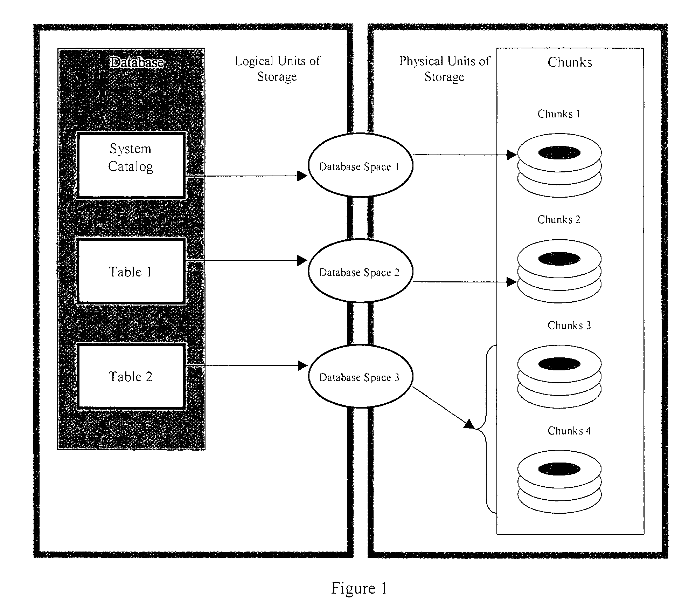

Figure 1 demonstrates the components of Informix database storage management. Informix storage management consists of two principal units: logical and physical units of storage.

Informix uses the physical units of storage to allocate disk space. Informix allocates disk space through database chunks. Chunks are the largest unit of physical disk that can be allocated to Informix OnLine data storage. Chunks can be allocated on a cooked file or a raw disk space. A cooked file is a Unix file. A raw disk space is analogous to a Unix raw disk partition. A raw device in Unix is a block device with a character-special interface such as /dev/rdsk/c1t6d0s2 is Solaris 2.X operating system. We can subdivide an entire partition or cooked file into smaller chunks using offsets. From the perspective of the UNIX operating system, a chunk is a stream of bytes. An offset allows us to indicate the number of Kbytes into a raw device or cooked file that are needed to reach a given chunk.

Each chunk consists of many pages. A page is the smallest unit of physical storage used by Informix. A page is the unit of disk storage that OnLine uses to read from and write to Informix databases. The page size on Sun SPARC workstation is set to 2048 bytes (2 Kbytes).

While creating chunks, Informix recommends to use symbolic link names to the cooked file or raw disk space instead of their actual name.

The logical unit of storage is the design of storing persistence objects in form of databases and tables. A database is a logical storage unit that contains tables and indexes. Each database also contains a system catalog that tracks information about many of the elements in the database, including tables, indexes, stored procedures, and integrity constraints. A table contains persistence objects, their attributes and states.

A database space is a logical concept between logical and physical units that enables Informix to control the location of persistence data. The database space provides the critical link between the logical and physical units of storage. It allows us to associate physical units (chunks) with logical units (databases and tables). A database space can have one or many chunks. Also, we can specify on which database space a database or a table shall reside.

There are three types of database spaces supported by Informix:
- Normal database space: database spaces on which user's databases and tables reside. Root database space is a normal database that OnLine creates initially. It is special because it contains reserved pages and internal pages that describe and track all other database spaces, blob spaces, chunks, ...
- Temporary space: a temporary database space is a database space reserved for the exclusive use of temporary tables.
- Blob space: a blob space is a type of database space used for storing Byte or Text data types. Byte and Text data types are used to store Binary Large Objects such as image, sound, memos, ...
Informix database spaces (chunks) can be mirrored.

### DSM General Functionality

The DSM is a middle ware utility that interfaces with the application administrator from one end, and Informix RDBMS, and physical disks from the other ends. It provides a Command Line Interface to the application administrator to size, configure, and maintain application database spaces without knowing about the details of the database space, its physical location, and its administration.

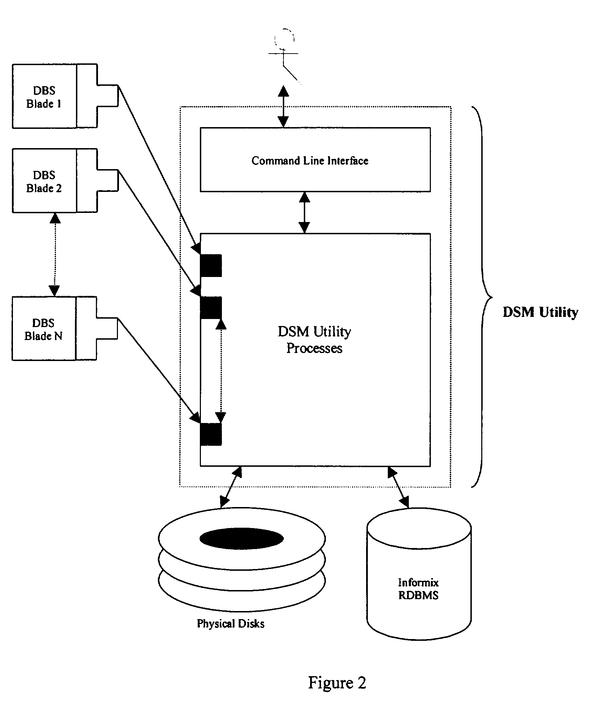

Figure 2 illustrates the building blocks the DSM utility from user's perspective.

The major component in the DSM architecture is DBS Blade. DBS Blade is a module that plug into the DSM utility, and extends its capabilities to do database space sizing and numbering from an application point of view. Each DBS Blade contains the expertise required for calculating the size, and naming an application database space. Moreover, It has the knowledge for determining the number of required application database space. DBS Blade which is analogous to a database space type, describes an application database space in terms of:
- Sizing Operation: the way in which each instance of a database space type is sized.
- Sizing Configurable Parameter: the configurable parameter required for sizing each instance of a database space type.
- Naming Operation: the way in which each instance of a database space type is named.
- Naming Configurable Parameter: the configurable parameter used in naming each instance of a database space type.
- Counting Operation: the way in which the number of database space instances of each database space type is determined.
- Counting Configurable Parameters: the configurable parameter used in determining the number of database space instances for each database space type.

For example, the operation, and configurable parameters for Resolve ATM PVC DBS Blade are defined as follows:
- Sizing Configurable Parameter: each instance of ATM PVC database space type is calculated based on the number of ATM PVC Objects, and number of ATM PVC attributes configured by the customer.
- Sizing Operation: each instance of ATM PVC database space type is sized according to the following formula:
   Number of ATM PVC * Number of configured ATM PVC attributes * X Kbytes
- Naming Configurable Parameter: each instance of ATM PVC database space type is named using "ck_atm" character string.
- Naming Operation: each instance of ATM PVC database space type is named according to the "ck_atm_?" regular expression where "?" is translated to a serial integer number, for instance, ck_atm_1, ck_atm_2, ck_atm_3, ...
- Counting Configurable Parameters: the number of ATMPVC database space instances is a function of "days" for which the ATM PVC statistics are kept around. Therefore "days" is the configurable parameter for determining the number of database spaces of ATMPVC type.
- Counting Operation: each ATMPVC database space keeps data belonging to only one day. Therefore, the required number of ATMPVC database space instances is equivalent to "days".

The value of configurable parameter is set in the DBS Blade configuration file, and used when one or many instances of database space is to be created, updated, or deleted.

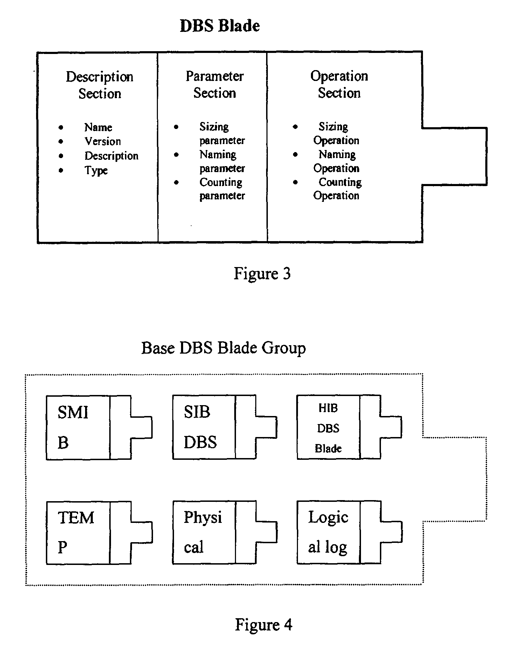

DBS Blades can be grouped. All the DSM commands invoked by the user can be performed on either a DBS Blade or a DBS Blade Group. Figure 4 demonstrates a group of DBS Blades for Resolve, called Resolve Base DBS Blade Group.

The DBS Blades used by an application must be installed on the server where the DSM utility is installed. Applications have to register their DBS Blades with the DMS utility first in order to be able to size, create, update, and modify instances of their application specific database spaces.

If a DSB Blade is being used by the DSM utility, it can not be unregistered. In order to unregister a DBS Blade, all database spaces using that DBS Blade must be removed from the system.

A DBS Blade can be upgraded to a newer version. There is no explicit upgrade command or interface; rather, the administrator upgrades a DBS Blade module by registering a new version of the module. If the DSM utility determines that an older version of the DBS Blade module is being used by the system, it will inform user, and abort the operation. If user would like to upgrade the module in any case, it has to use the enforce flag with register command to inform the DSM utility to upgrade unconditionally. If upgrade fails, the DSM utility restores itself (its database) to its state before the upgrade. The upgrade of DBS Blade to a new version does not impact the existing database spaces created with the older version, unless user wants to update the size of the databases using the new registered DBS Blade. In this case, the new size will be calculated using the new configurable parameters, and sizing operation.

The DSM utility provides a set of commands that enables application administrators to perform the following operations:
**Administrative Commands:** The administrative commands allow the user to:
- Register a DBS Blade with the DSM utility.
- Unregister a DBS Blade with the DSM utility.
- Add a physical disk to be used by the DSM utility for allocating DBS Blade database spaces.
- Delete a physical disk from the DSM utility if not used by any DBS Blades at the time of deletion.
- Replacing a physical disk with another one in the DSM utility after a disk failure.
- Group the DBS Blades together.
- And synchronize the Informix database space information with DSM utility.

**Operational Commands:** The operational commands allow the user to:
- Size database spaces based on the values set in the DBS Blade's configuration files, or passed through their command line interface.
- Create database spaces with specific names and size as described by a DBS Blade or a DBS Blade group using the values set in the DBS Blades' configuration files.
- Update the size of all or some database spaces described by a DBS Blade or a DBS Blade group using the values set in the DBS Blades' Configuration files.
- Delete all or some database spaces described by a DBS Blade or a DBS Blade Group using the values set in the DBS Blades' Configuration files.

**Informational Commands:** The informational commands allow the user to:
- List all the DBS Blade available on the system.
- List all the DBS Blades, or DBS Blade Groups registered with the DSM utility.
- List all configured physical disks to be used by the DSM utility, and whether they pertain any database space at the moment or not.
- List detailed information about database spaces that are described by all or some DBS Blades or DBS Blade Groups.

The DSM utility uses Informix RDBMS for storing its internal data structures. The Informix Online Dynamic Server 7.3 has to be installed, and initialized before installing the DSM utility. The DSM utility requires minimum 50 Mbytes of root database space initialized by Informix Online Dynamic Server.

None of the database spaces created by the DSM utility will be removed, if the DSM utility is de-installed. None of the installed DBS Blades will be removed, if the DSM utility is de-installed.

The first version of DSM utility is introduced in Resolve 3.0 environment. It uses Resolve generic infrastructure for logging, and user/group configuration. Therefore, Resolve General package has to be installed before installing the DSM utility. This dependency can be removed in future releases should we like to introduce the DSM utility as a separate product to be used by Resolve, NetworkWare, or any other applications.

### DSM Functionality in Resolve 3.0

This section includes an overview of how Resolve 3.0 leverages the capabilities of DSM utility in managing its database spaces during its install, upgrade, and operation. It only covers the high-level interactions with the DSM utility.

### Using the DSM utility during the new installation of Resolve 3.0

Resolve database spaces shall be created during the Resolve 3.0 installation and prior to the creation of its databases. The scenario described below is what has to be done for allocating Resolve database spaces using the DSM utility.
- The administrator has to install Informix RDBMS and initialize it with at least 50 Mbytes of root database space.
- The administrator installs the DSM utility on the system where Informix RDBMS, and Resolve server are installed and configured. The DSM utility creates its own database required for its internal operation in Informix root database space.
- The administrator installs the Resolve DBS Blades that DMS utility requires in order to create Resolve database spaces.
- The DSM Agent registers the Resolve DBS Blades with the DMS utility.
- The DSM Agent groups the Resolve DBS Blades if required. For instance, Resolve Base DBS Blade group has to be introduced to the DSM utility before issuing any Operational commands targeting that group.
- The DSM Agent issues the Size command on a DBS Blade or a DBS Blade group.
- The DSM utility calculates and provides an estimated size for the required database spaces based on the values set for the DBS Blade sizing, and counting parameters.
- The DSM Agent informs the administrator about the estimated size and disk space requirement
- Based on the estimated size, the administrator has to make sure that there are enough physical disks available on the system before requesting the creation of database spaces.
- The administrator provides physical disk information to the DSM agent to configure the disks on his behalf.
- The DSM agent configures the DSM utility with the physical disks to be used for storing Resolve database spaces.
- The DSM agent sets the sizing, counting, and naming configurable parameters for each DBS Blade if required and based on the administrator's input.
- The DSM agent issues the Create command on a DBS Blade or a DBS Blade group to create Resolve database spaces.
- The DSM utility re-calculates the size of each database space instance based on the values set for the DBS Blade sizing parameters set through CLI or in the DBS Blade configuration file. It creates the Resolve database spaces using the calculated size. It generates the name of database spaces based on the naming parameter and operation. It determines the number of database spaces based on the counting parameters and operation.
- The administrator is now able to install Resolve databases on the newly created database spaces.
- If the operation fails at any stage during the above scenario, the appropriate error message will be logged, and the system is restored to the previous stable state. The DSM error conditions, commands returned values are further discussed in the Functional Details section.

### Using the DSM utility during an upgrade to Resolve 3.0

The DSM utility is initially introduced in Resolve 3.0. The preceding Resolve systems installed at the customer site do not have the DSM utility on their system. A normal upgrade comes with the introduction of new database spaces, the updates in the existing database spaces size, and the removal of the obsolete database spaces. The scenario described below is what has to be done for upgrading Resolve database spaces using the DSM utility.
- The administrator ensures that Informix root database space is at least 50 Mbytes.
- The administrator installs the DSM utility on the system where Informix RDBMS and Resolve server are installed. The DSM utility creates its own database required for its internal operation in root database space.
- The administrator installs the Resolve DBS Blades that DMS utility requires in order to upgrade the Resolve database spaces.
- The DSM agent registers the Resolve DBS Blades with the DMS utility if they have not registered yet.
- The DSM agent groups the Resolve DBS Blades if required. For instance, Resolve Base DBS Blade group has to be introduced to the DSM utility before issuing any Operational commands targeting that group.
- The DSM agent issues the synchronization command in order for the DSM utility to obtain detailed information of database spaces managed by Informix RDBMS and associate them with DBS Blades for the future operations.
- The DSM agent sets the sizing configurable parameters for each DBS Blade if required and based on the administrator's input.
- The DSM agent issues the Size command on a DBS Blade or a DBS Blade group.
- The DSM utility calculates and provides an estimated size for the required database spaces based on the values set for the DBS Blade sizing parameters.
- The DSM agent informs the administrator of the estimated size. Based on the estimated size and already-configured disk space, the administrator has to make sure that there are enough physical disks configured before continuing the update operation.
- The administrator configures the DSM utility with more physical disks if required through DSM agent. The administrator can configure more physical disks at this point of time in order to be used by the DSM utility later during the Resolve operation.
- The DSM agent issues the Update command for a Resolve DBS Blade or DBS Blade group whose database spaces require update in size.
- The DSM utility updates the Resolve database spaces described by Resolve DBS Blades according to the following rules:
   - The new database space size is calculated for each DBS Blade using the value of sizing configurable parameters.
   - If the new size is larger than the size of each database space instance, then the database spaces are updated to the new size by adding one or more database chunks.
   - If the new size is equal or smaller than the size of each database space instance, then the database spaces remain intact.
- For the new database spaces introduced in Resolve 3.0, the DSM agent issues the Create command on the appropriate DBS Blade, DBS Blade group.
- For the obsolete database spaces, the DSM agent issues the Delete command on the appropriate DBS Blade, or DBS Blade group.
- If the operation fails at any stage during the above scenario, the appropriate error conditions will be logged, and the system is restored to the previous stable state. The DSM error conditions and commands returned values are further discussed in the Functional Details section.

### Using the DSM utility during the operation of Resolve 3.0

The following scenarios are the potential scenarios that can happen during the Resolve 3.0 operation:
- Updating the size of all or some of the Resolve database spaces based on the new values of the sizing parameters. For instance, when number of supported network objects is increased, Resolve needs more disk space for its databases.
- Adding one or more database spaces to Resolve.
- Deleting one or more database spaces from Resolve.
- Adding and removing physical disks used by Resolve database spaces.
- Recovering from a physical disk failure which holds Resolve database spaces.
- Inquiring about the status of the Resolve database spaces, and its physical disks. This section describes how the DSM utility is used for the realization of each scenario.

### Updating the size of all or some database spaces

Resolve may require additional database disk space to store its operational, historical, and/or summarized data during its operation. For example, the number of network objects supported by Resolve has a direct impact on its database size. If the number of supported network objects changes, the Resolve database spaces have to be updated accordingly. Within the paradigm of the DSM utility, Resolve database spaces are described by a series of DBS Blades or DBS Blade groups. One of the sizing parameters that impacts the sizing of almost all the Resolve DBS Blades is the number of network objects.

Using the DSM utility for updating the size of Resolve database spaces, the administrator must set new values of the sizing parameters (e.g. number of network objects) to the DSM utility. This can be performed either in the configuration file of each Resolve DBS Blade, or through the Command Line Interface (CLI).

After setting the new sizing values in the configuration files the administrator issues an Update command for a DBS Blade or a DBS Blade group.

The DSM utility calculates the new size of each database space described by the DBS Blade (or DBS Blade group). If the new size is greater than the existing size of each database space instance, the DSM utility will increase the size by adding more database chunks. If the new size is equal or smaller than the existing size, the DSM utility informs users that the operation is completed with no change in the database space size.

All error messages are logged through the Resolve logging system. Failure in any stage of the update operation will result in restoring the system to the previous stable state. Moreover, during the Resolve operation, the administrator may need to increase the size of only one or few database spaces, not all database spaces described by a DBS Blade. In this case, the administrator list all the database spaces related to a specific DBS Blade to obtain the name of each database space instance that requires additional disk space. Then, the administrator issues an update command for that DBS Blade indicating the name of the database space whose size has to be changed. The administrator can also overwrite the size calculated by each DBS Blade, by passing a fixed size in Kbytes to the DSM utility via its CLI.

### Adding one or more database spaces

The Resolve administrator has to be able to add one or more database spaces during the Resolve operation. One of the instances when new database spaces are required is when the customer would like to keep the historical data of a network object type for longer period of time. For example, the customer would like to increase the number of days for ATM PVC historical data from 60 to 70 days. If each day of ATM PVC historical data is kept in a separate database space, the Resolve will need 70 database spaces of ATM PVC type for its operation.

Before adding any database spaces, the administrator has to make sure that the ATM PVC DBS Blade has already been registered with the DSM utility. If the DBS Blade is not registered, or even installed, the administrator has to first install and then register the DBS Blade.

The administrator can issue a Create command passing the additional value for counting parameter, e.g. 10, to the DSM utility through its Command Line Interface. The DSM utility will calculate the size and the number of database spaces, and create the new additional database spaces.

### Deleting one or more database spaces

The administrator need to be able to delete Resolve database spaces when required. This means that the administrator have to be able to request the DSM utility to delete all or some of the database spaces belonged to a Resolve DBS Blade, or Resolve DBS Blade group.

At the outset, The administrator has to list database spaces described by a DBS Blade or all DBS Blades. This is to obtain the name of database spaces for deletion.

Then administrator requests the delete operation from the DSM utility via its CLI to be performed for a DBS Blade, DBS Blade group or a specific database space instance described by a DBS Blade.

Before requesting any delete operation, the administrator must ensure that the user data do not reside in any of the database spaces that are going to be deleted. The deletion will fail, if Informix RDBMS still uses the database space for storing user's databases. In case of failure, the system is restored to the previous stable state of the operation. All error messages are logged for user's information.

### Adding or removing physical disks

Each application such as Resolve has to introduce its physical disks to the DSM utility. The DSM utility will create the application's database spaces on those drives specified by the administrator. The physical disks are assigned per application basis. Therefore, Resolve physical disks are not used by any other application, and vice versa.

Resolve can assign either raw disk partitions, or Unix files for its physical disks. The administrator can configure physical disks in two ways: through the DSM command line or through a configuration file. In either case, the DSM utility verifies the size of the physical disks against the size specified by the user. If both sizes are the same and the read/write permissions on the disk are set properly, the DSM utility allocates the physical disks for the application.

Once the Resolve database spaces reside on a physical disk, the physical disk can not be de-allocated from the DSM utility. In order to do so, the administrator must remove all database spaces residing on that physical disk prior to requesting the removal of that disk. This means that the administrator has to be able to list all physical disks with the database spaces residing on them.

In case of failure in adding/deleting physical disks to the DSM utility, the DSM utility logs the error messages in the Resolve logging system for user's information. The DSM utility restores the system status to the previous stable state prior to the start of the add/delete operation.

### Recovering from the physical disk failure

There is always a possibility for a physical disk failure during the Resolve operation. If a physical disk fails, the administrator has to be able to replace it with a new physical disk of the same or greater size. The administrator has to perform the following steps in order to recover from a physical disk failure in Resolve environment using the DSM utility.
- The administrator has to ensure that the database backup of all Resolve database spaces is available before starting the operation.
- The administrator request from the DSM utility to list all the database spaces, chunks located on the failed physical disk.
- The administrator will issue a replace command to the DSM utility for replacing a configured disk with a new one. The information about the new disk can be passed through the command line interface. If there are more than one disk to replace, the administrator can specify them in a configuration file that will be read by the DSM utility once the replace command is executed. The replace operation is successful if the physical disk size is equal to the size specified by the administrator, and the read/write permissions of the physical disk are set properly.
- The DSM utility updates its internal information with the new disk information.
- The administrator uses Resolve or Informix tools to restore the failed database spaces.
- Once the restore completes, the administrator issues a sync command to the DSM utility. The DSM utility synchronizes its internal information with the Informix RDBMS if required.
- In case of failure at any stage of the replace operation, the error messages are logged for the user's information, and the DSM utility is restored to the previous stable state of the operation.

### Inquiring about the status of one or more database spaces, and physical disks

The Resolve administrator needs to obtain the following information while using the DSM utility as a tool for Resolve database storage management:
- List of all DBS Blade available (installed) on the system.
   - DBS Blade name
   - DBS Blade version
   - DBS Blade description
   - DBS Blade type (Normal, Temp, Blob)
- List of all DBS Blades, or DBS Blade groups registered with the DSM utility.
   - DBS Blade name
   - DBS Blade version
   - DBS Blade description
   - DBS Blade type (Normal, Temp, Blob)
   - DBS Blade size if available
- Detailed information on the physical disks configured for Resolve application. The detailed information includes:
   - The total size of each physical disk
   - The type of each physical disk (Unix file or raw partition)
   - The database spaces and chunks located on each disk
   - The available and used space on each physical disk.
- Detailed information on all database spaces and chunks managed by DSM utility per DBS Blade, DBS Blade groups or overall on the system. The detailed information includes:
   - The name of the DBS Blades.
   - The database spaces configured for each DBS Blade: their size, their names, their types (Normal, Temp, Blob)
   - The database chunks configured for each database space: the name of each chunk (syschunks.fname or the logical path name), the size of each chunk, the offset from the beginning of the disk, and the name of the physical disks on which they reside.

### Description of DBS Blades and DBS Blade group

A DBS Blade is analogous to an application database space type. An application database space type describes the common specifications of a set of database spaces in terms of their name, numbers and size. Each DBS Blade is a module that plugs into the DSM utility and contains the expertise required for:
1. Calculating the size of a set of application database spaces.
2. Naming a set of application database spaces.
3. Determining the number of application database spaces.

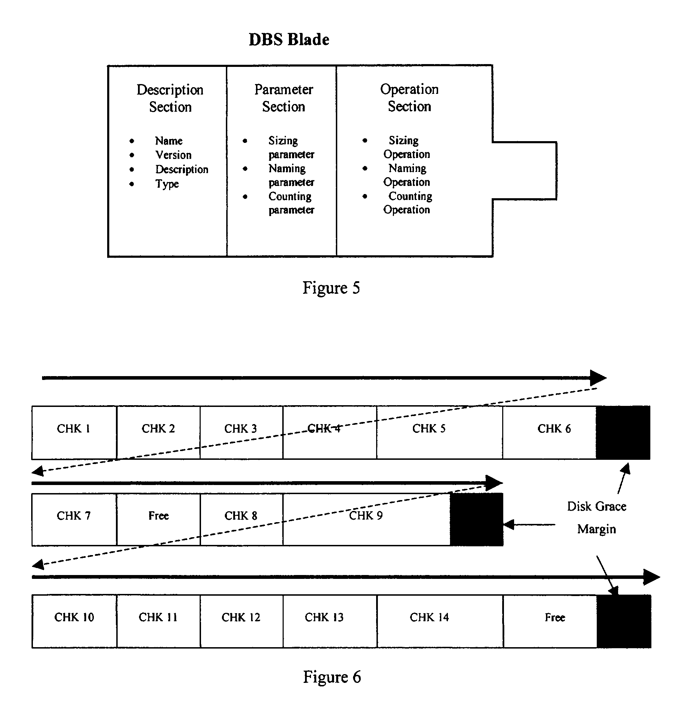

Each DBS Blade consists of three main parts: DBS Blade Description, DBS Blade Parameters, and DBS Blade Operations (Figure 5).

The DBS Blade Description part provides general information about the DBS Blade:
- Name: a unique name for each DBS Blade. The DSM utility recognizes each DBS Blade by its name.
- Version: an integer number indicating the version of a DBS Blade. The DSM utility uses this number when it registers a DBS Blade.
- Description: a general textual description of a DBS Blade, its purpose, and its use.
- Type: the corresponding Informix database space type that the DBS Blade supports. The valid types are: Temp, Normal, Blob.

The DBS Blade Parameters part is a basic component of a DBS Blade module. It is a collection of application-defined parameters used for naming, numbering and calculating the size of the application database spaces. There are three categories of parameters defined by each DBS Blade: Sizing, Naming, and Counting parameters.

The Sizing parameters are application-defined parameters used by Sizing operation to calculate the size of each instance of an application database space type.

The Naming parameters are application-defined parameters used by Naming operation to name each instance of an application database space type.

The Counting parameters are application-defined parameters used by the Counting operation to determine the number of application database spaces.

The values of the application-defined parameters can be set in two ways:
1. In the DBS Blade configuration file.
2. Through the command line interface when user invokes a DSM command.

The precedence shall be given to the values set through the CLI.

The DBS Blade Operations part is another component of DBS Blade module. It consists of three operations: the Sizing, Naming and Counting operations.

The Sizing operation is an application-defined sizing routine that operates on the Sizing parameters. Using this routine, the DSM utility can identify the size of each application database space type. Different DBS Blades can share the same operation.

The Naming operation is an application-defined naming routine that operates on the Naming parameters. Using this routine, the DSM utility can specify a unique name for each instance of an application database space type.

The Counting operation is an application-defined counting routine that operates on the Counting parameters. Using this routine, the DSM utility can determine the number of application database spaces.

In order to ease the use of DBS Blades, we can group them together. A group of DBS Blades is called DBS Blade group. The DSM utility treats DBS Blade groups the same as DBS Blades. All the Operational and Informative commands applicable to a DBS Blade is also applicable to a DBS Blade group.

Each application has to define its DBS Blades and register them with the DSM utility. Once registered, application will be able to size and manage its database spaces based on a set of application-defined (domain-defined) parameters. An example for an application-defined parameter is "number of network objects" for Resolve application.

### Defining a DBS Blade

Each application must define and develop their DBS Blades. This section describes how an application can define its DBS Blade modules in the form that can be used by the DSM utility.

The DSM utility requires three files for each DBS Blade modules: a description file, an operation file, and a configuration file. Except for the operation file, the DBS Blade files (description and configuration files) can not be shared among different DBS Blades.

### DBS Blade Description file

The DBS Blade Description file contains the information used by the DSM utility to recognize and register a DBS Blade. It is a text file with a specific format that defines all three major components of a DBS Blade: DBS Blade Description, DBS Blade Parameters, and DBS Blade Operations.

The filename naming convention for each DBS Blade description file is *"<DBS Blade Name>. <DBS Blade Version>.data".* The DSM utility looks in $DSMHOME/extend directory for all available DBS Blades description files. The following table demonstrates the content of a DBS Blade Description file.

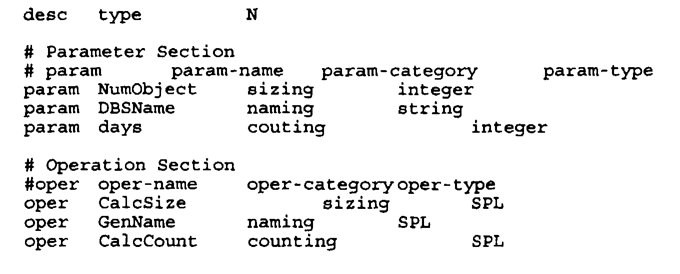

The Description file consists of three sections: description section, parameter section, and operation section. A description entry in the description section is composed of three TAB-separated fields:
*desc desc-name desc-value*
*desc:* A keyword by which the DSM utility recognizes the entry as a description entry.
*desc-name:* The name of a description entry. The valid values are name, version, description and type.
*desc-value:* The value assigned to a desc_name. The table below describes the valid values for each name.

| **Desc-name** | **Desc_value** | **Description** |
|---|---|---|
| name | Char(30) | DBS Blade name. The DSM utility recognizes each DBS Blade by this name |
| version | integer | DBS Blade version. The DSM utility uses this number when registering the DBS Blade. |
| description | Char(255) | Description of a DBS Blade. This field usually highlights the use and purpose of DBS Blade. |
| type | Char(1) | The type of Informix database space supported by this DBS Blade: |
| | | N: Normal database space |
| | | T: Temporary database space |
| | | B: Blob database space (This type is not supported in this release) |

A parameter entry in the parameter section is composed of four TAB-separated fields:
*param param-name param-category param-type*
*param:* A keyword. With this keyword, the DSM utility recognizes the entry as a parameter entry.
*param-name:* An application-defined parameter name is defined in this field. It is an alphanumeric, 30-character length field, which must start with a character.
*param-category:* The category of an application-defined parameter. It defines whether the parameter is a Sizing parameter, a Naming parameter or a Counting parameter. The valid values are "sizing", "counting" and "naming".
*param-type:* The type of an application-defined parameter. If the *param-category* is set to "sizing" or "counting", the supported valid value is "integer". If the *param-category* is set to "naming", the supported valid value is "string".

An operation entry in the operation section is composed of four TAB-separated fields:
*oper oper-name oper-category oper-type*
*oper:* A keyword by which the DSM utility recognizes the entry as an operation entry.
*oper-name:* An application-defined operation name is defined in this field. It is an alphanumeric, 30-character length field, which shall start with a character. *oper-name* can be shared by DBS Blades.
*oper-category:* The category of an application-defined operation. It defines whether the operation is a Sizing operation, Counting operation or a Naming operation. The valid values are "sizing", "counting" and "naming". Only the first Sizing, Counting and Naming operations defined in the operation section will be used by the DSM utility. Defining the Counting operation is optional for each DBS Blade. If the Counting operation is not defined, the number of instances for each DBS Blade will set to 1 by default.
*oper-type:* This field defines the implementation type of the operation routine. An operation routine can be implemented in different languages such as C++, java, SPL. The only supported type in this release is SPL.

Line Feed character determines the end of each entry line. Entry lines with # at the beginning are recognized as comments. "\"Character at the end of each entry line determines the continuation of the entry line to the next consecutive line.

When a DBS Blade is registered, The DSM utility parses the description file. Refer to the DSM register command for more information on the error conditions that can be raised while parsing this file. The DSM utility looks for only three operation entries in the DBS Description file, one for naming, one for counting and one for sizing operations. Once the operations found, the DSM utility ignores the rest of the operations defined in the file.

### DBS Blade Operation file

The DBS Blade Operation file contains the sizing, counting and naming routines written in SPL. These operations are stored in the database server when the DSM utility registers a DBS Blade. Once an operation is registered as part of a DBS Blade, it can be used by other DBS Blades that conform to the interface of that operation.
Informix enforces a unique name constraint on the name of Stored Procedures. Therefore, the operation names of type SPL shall be unique per each Informix database server. It is suggested to use the *"<DBS Blade Name>_<routine name>" naming* convention for routine names.

The following table demonstrates the interfaces to the DBS Blade operation routines.

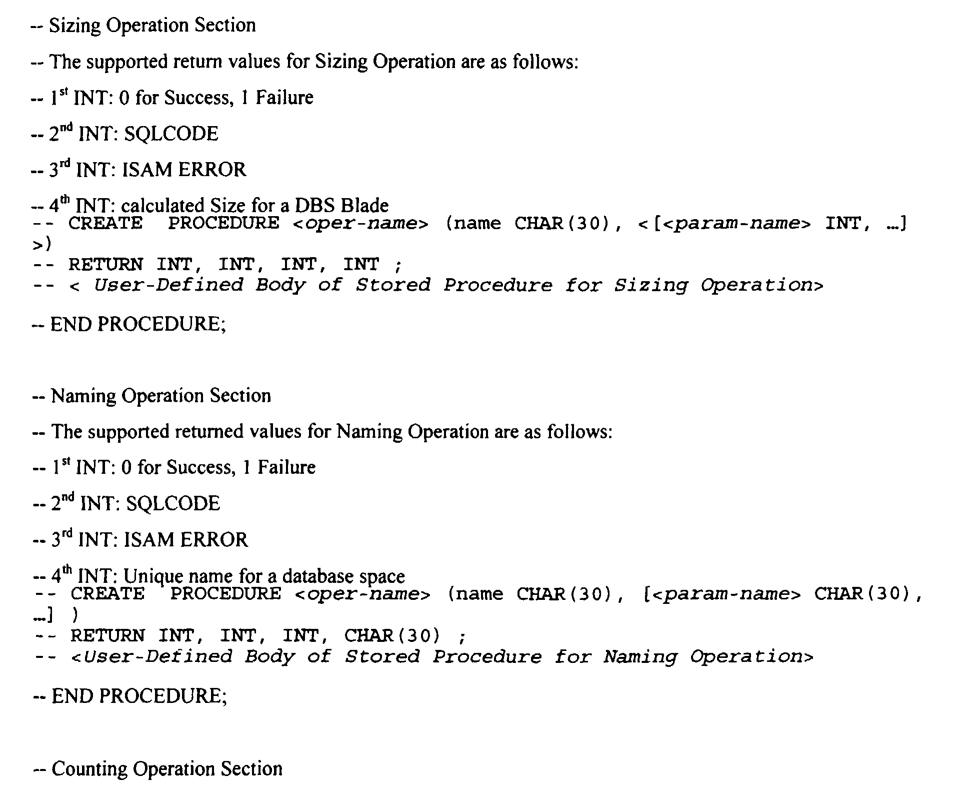

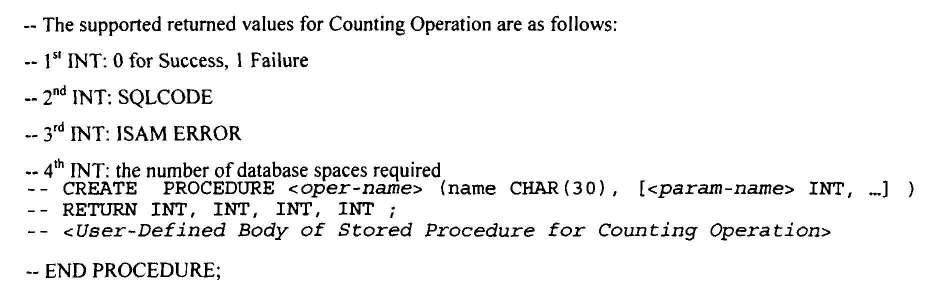

Each Operation file can be composed of three sections: Sizing Operation, Naming Operation and Counting Operation sections. Each section defines an Informix stored procedure routine for sizing, naming and counting operations. The DBS Blade developer shall uncomment the lines between "CREATE PROCEDURE" and "END PROCEDURE" lines, and replace the text in <> with the appropriate SPL syntax.
*<oper-name>:* The sizing, counting or naming operation-name as defined by user in the DBS Blade Description file.
*<param_name>:* The sizing, counting or naming parameter-name as defined by user in the DBS Blade Description file
*<User-defined Body of Stored Procedure for Sizing Operation>:* The body of an user-defined routine written in SPL that calculates the size of a DBS Blade based on its input parameters.
*<User-defined Body of Stored Procedure for Naming Operation>:* The body of an user-defined routine written in SPL that generates a unique name for a database space based on its input parameters.
*<User-defined Body of Stored Procedure for Counting Operation>:* The body of an user-defined routine written in SPL that determines the number of DBS Blade instances based on its input parameters.
The input interfaces to the Sizing, Counting and Naming routines are defined in the following table.

| Input Interfaces to the Naming and Sizing routines | | | |
|---|---|---|---|
| **Operation Type(s)** | **Input Parameter(s)** | **Parameter Type(s)** | **Description** |
| Sizing, | name | Char(30) | Name of the DBS Blade. The DSM |
| Naming, Counting | | | utility passes the name of the DBS Blade to the Naming, Counting and Sizing routine. |
| Sizing, Counting | <*param-name*> | INT | The name of Sizing or Counting parameters defined in the DBS Blade description file. The DSM utility passes the value of the parameters by name and as set in the Configuration file or through the CLI. The only supported type for Sizing and Counting parameters is INT. |
| Naming | <*param-name*> | CHAR(30) | The name of Naming parameters defined in the DBS Blade description file. The DSM utility passes the value of the parameters by name and as set in the Configuration file or through the CLI. The only supported type for Naming parameter is CHAR(30). |

The output interfaces to the Sizing, Counting and Naming routines are defined in the following table.

| Input Interfaces to the Naming and Sizing routines | | | |
|---|---|---|---|
| **Operation Type(s)** | **Output Returned Value(s)** | **Value Type(s)** | **Description** |
| Naming, Sizing, Counting | 1^{st} returned value | INT | 0 as Successful Operation. 1 as Failed Operation. |
| Naming, Sizing, Counting | 2^{nd} returned value | INT | If the sizing, counting or naming operations fail, it shall be set to Informix SQLCODE. Otherwise, it |
| | | | shall be set to 0. |
| Naming, Sizing, Counting | 3^{rd} returned value | INT | If the sizing, counting or naming operations fail, it shall set to the Informix ISAM Error. Otherwise it shall be set to 0 |
| Sizing | 4^{th} returned value | INT | If the sizing operation is successful, it shall be set to the calculated size in Kbytes. Otherwise it shall be set to -1 |
| Counting | 4^{th} returned value | INT | If the counting operation is successful, it shall be set to the number of database space instances required. Otherwise it shall be set to -1. |
| Naming | 4^{th} returned value | CHAR(30) | If the naming operation is successful, it shall be set to the generated name. Otherwise it shall be set to "Undefined". |

The following figure demonstrates a sample operation file for Resolve SMIB DBS Blade Sizing Operation.

While registering a DBS Blade, The DSM utility stores the sizing, counting and naming routines in the Informix database server. Refer to the DSM register command for more information on the error conditions and exceptions that can be raised during this process. The DSM utility registers only one operation of each operation type per DBS Blade. While registering a DBS Blade, The DSM utility shall only process the operations defined by the DBS Blade description file, and ignore the rest of operations defined in the same file.

### DBS Blade Configuration file

The DBS Blade Configuration file contains the values set for each parameter defined in the Description file. These values can also be set through the DSM command line interface, but precedence shall be given to the command line parameters.

The DBS Blade Configuration file shall be named "<*DBS Blade Name*>. <*DBS Blade Version>. cfg".* The configuration file shall be formatted according to section 3.1.5.4 in [4]. If the configuration file could not be read, a "NoBladeCfgFile" exception shall be raised. The DSM utility looks in $DSMHOME/extend directory for all available DBS Blades configuration files. The following demonstrates the content of a DBS Blade Configuration file.

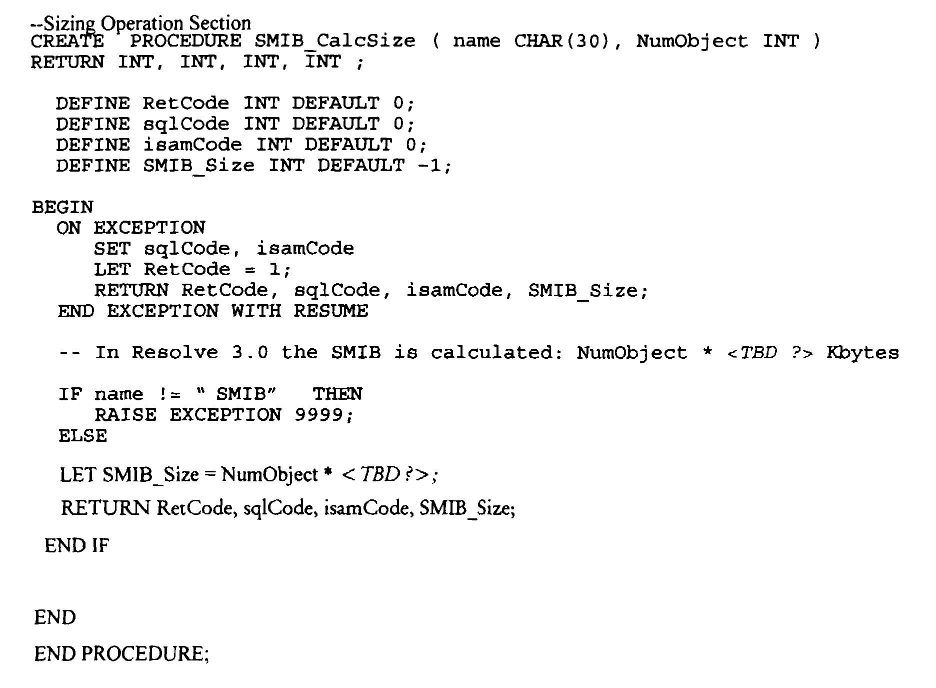

The following is a Sample for DBS Blade Configuration File 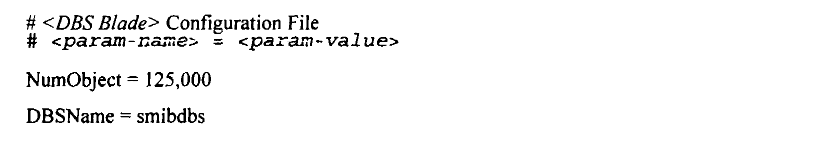 *param-name:* The name of an application-defined parameter defined in DBS Blade Description file.
*param-value:* The value of an application-defined parameter defined in DBS Blade Description file. Only character string values are supported for naming parameters. Only integer values are supported for sizing parameters.

While registering a DBS Blade, the DSM utility shall check for the existence of the DBS Blade Configuration File.

The content of a DBS Blade Configuration file is re-examined every time a create, update or size Operational commands are executed on that DBS Blade.

### Resolve DBS Blades and DBS Blade groups

This section identifies the Resolve specific DBS Blades, DBS Blade groups, DBS Blade parameters, and DBS Blade operations describes Resolve DBS Blades.

| **DBS Blade Name** | **DBS Blade Version** | **DBS Blade Type** | **DBS Blade Description** |
|---|---|---|---|
| SMIB | 1.0 | Normal | Used in Resolve to store operational and volatile data |
| SIB | 1.0 | Normal | Used in Resolve to store summarized data |
| PHYLOG | 1.0 | Normal | Used in Resolve to hold Informix physical logs |
| LOGICLOG | 1.0 | Normal | Used in Resolve to hold Informix logical logs |
| TEMP | 1.0 | Temporary | Used in Resolve for Informix temporary database space |
| SIBEUDBS | 1.0 | Normal | Used in Resolve for End User database storage |
| HIB | 1.0 | Normal | Used in Resolve to assist basic configuration of historical data. |
| HIBEVENT | 1.0 | Normal | Used in Resolve for event historical data |
| HIBOLDSTATE | 1.0 | Normal | Used in Resolve for old state historical data |
| HIBATMPVC | 1.0 | Normal | Used in Resolve for ATM PVC historical data |
| HIBFRPVC | 1.0 | Normal | Used in Resolve for FR PVC historical data |
| HIBFRUNI | 1.0 | Normal | Used in Resolve for FR UNI historical data |
| ? | 1.0 | Normal | |
| ? | 1.0 | Normal | |
| ? | 1.0 | Normal | |
| ? | 1.0 | Normal | |

| Resolve DBS Blade Groups | | |
|---|---|---|
| **DBS Blade Group** | **DBS Blade In Group** | **Description** |
| Base | SMIB, SIB, PHYLOG, LOGICLOG, TEMP, HIB | This group includes all DBS Blades required for creating and maintaining Resolve Base database spaces. Resolve Base is the minimum level of operation supported by Resolve. |
| QOS | HIBEVENT, HIBOLDSTATE | This group includes DBS Blades required for creating and maintaining Resolve Quality of Service database spaces. With the database spaces in this group, Resolve can extend its functionality to support the quality of services data and operation. |
| | | |

describes the Sizing, Counting and Naming parameters of each Resolve DBS Blade.

| Parameters of Resolve DBS Blades | | | |
|---|---|---|---|
| **DBS Blade** | **Parameter** | **Parameter Type** | **Description** |
| SMIB | NumObject | Sizing | A projected number of network-objects in the customer's network including the growth in 2 years. |
| | DBSName | Naming | A string used in naming each instance of SMIB database space type. The value of DBSName is Resolve 3.0 is "smibdbs". |
| | Not Defined | Counting | Default 1 database space instance shall be used. |
| SIB | NumObject | Sizing | A projected number of network-objects in the customer's network including the growth in 2 years. |
| | NumSumDays | Sizing | Number of days to pertain daily summarized data for each network-object. |
| | NumSumMons | Sizing | Number of months to pertain monthly summarized data for each network-object. |
| | DBSName | Naming | A string used in naming each instance of SIB database space type. The value of DBSName is Resolve 3.0 is "sibdbs". |
| | Not Defined | Counting | Default 1 database space instance shall be used. |
| PHYLOG | NumObject | Sizing | A projected number of network-objects in the customer's network including the growth in 2 years. |
| | DBSName | Naming | A string used in naming each instance of PHYLOG database space type. The value of DBSName is Resolve 3.0 is "phylogdbs??". |
| | Not Defined | Counting | Default 1 database space instance shall be used. |
| LOGICLOG | NumObject | Sizing | A projected number of network-objects in the customer's network including the growth in 2 years. |
| | DBSName | Naming | A string used in naming each instance of LOGICLOG database space type. The value of DBSName is Resolve 3.0 is "txnlogdbs??". |
| | Not Defined | Counting | Default 1 database space instance shall be used. |
| TEMP | NumObject | Sizing | A projected number of network-objects in the customer's network including the growth in 2 years. |
| | DBSName | Naming | A string used in naming each instance of TEMP database space type. The value of DBSName is Resolve 3.0 is "tempdbs??". |
| | Not Defined | Counting | Default 1 database space instance shall be used. |
| SIBEUDBS | NumObject | Sizing | A projected number of network-objects in the customer's network including the growth in 2 years. |
| | DBSName | Naming | A string used in naming each instance of SIBEUDBS database space type. The value of DBSName is Resolve 3.0 is "SIBEUDBS". |
| | Not Defined | Counting | Default 1 database space instance shall be used. |
| HIB | NumObject | Sizing | A projected number of network-objects in the customer's network including the growth in 2 years. |
| | DBSName | Naming | A string used in naming each instance of HIB database space type. The value of DBSName is Resolve 3.0 is "hibdbs". |
| | Not Defined | Counting | Default 1 database space instance shall be used. |
| HIBEVENT | NumObject | Sizing | A projected number of network-objects in the customer's network including the growth in 2 years. |
| | NumEvent | Sizing | A projected number of network-events per network-object that Resolve supports. Resolve 3.0 support maximum 20 network-events per network-object. |
| | DBSName | Naming | A string used in naming each instance of HIBEVENT database space type. The value of DBSName is Resolve 3.0 is "ck_event_". |
| | Days | Counting | The number of days for which the historical QOS data will be kept around. Its default value in Resolve 3.0 is 60. |
| HIBOLDSTATE | NumObject | Sizing | A projected number of network-objects in the customer's network including the growth in 2 years. |
| | NumEvent | Sizing | A projected number of network-events per network-object that Resolve supports. Resolve 3.0 support maximum 20 network-events per network-object. |
| | DBSName | Naming | A string used in naming each instance of HIBOLDSTATE database space type. The value of DBSName is Resolve 3.0 is "ck_ostate_???". |
| | Days | Counting | The number of days for which the historical QOS data will be kept around. Its default value in Resolve 3.0 is 60. |
| ATMPVC | NumObject | Sizing | A projected number of ATM PVC objects in the customer's network including the growth in 2 years. |
| | NumAttr | Sizing | A projected number of ATM PVC attributes interesting to the network operator for being monitored through Resolve. |
| | DBSName | Naming | A string used in naming each instance of ATMPVC database space type. The value of DBSName is Resolve 3.0 is "ck_atm_". |
| | Days | Counting | The number of days for which the historical statistics data of ATMPVC will be kept around. Its default value in Resolve 3.0 is 60. |
| FRPVC | NumObject | Sizing | A projected number of FR PVC objects in the customer's network including the growth in 2 years. |
| | NumAttr | Sizing | A projected number of FR PVC attributes interesting to the network operator for being monitored through Resolve. |
| | DBSName | Naming | A string used in naming each instance of FRPVC database space type. The value of DBSName is Resolve 3.0 is "ck_fr_". |
| | Days | Counting | The number of days for which the historical statistics data of FRPVC will be kept around. Its default value in Resolve 3.0 is 60. |
| FRUNI | NumObject | Sizing | A projected number of FR UNI objects in the customer's network including the growth in 2 years. |
| | NumAttr | Sizing | A projected number of FR UNI attributes interesting to the network operator for being monitored through Resolve. |
| | DBSName | Naming | A string used in naming each instance of FRUNI database space type. The value of DBSName is Resolve 3.0 is "ck_fruni_". |
| | Days | Counting | The number of days for which the historical statistics data of FRUNI will be kept around. Its default value in Resolve 3.0 is 60. |
| ? | | | |
| | | | |

Table describes the Sizing, Counting and Naming operations of each Resolve DBS Blade.

**Table -**

| Operations of Resolve DBS Blades | | | | |
|---|---|---|---|---|
| **DBS Blade** | **Operation** | **Operation Type** | **Implementation Type** | **Description** |
| SMIB | Base_CalcSize | Sizing | SPL | Calculates the size of an instance of SMIB database space type using the SMIB Sizing parameters. In Resolve 3.0 the SMIB is calculated: If NumObject =< 20,000 then size is equal to <*TBD ?*> If 20,000 < NumObject =< 80,000 then size is equal to <*TBD ?*> If 80000 < NumObject =< 125,000 then size is equal to <*TBD ?*> |
| | Base_GenNa me | Naming | SPL | Generate a unique name for each instance of SMIB database space type using the SMIB Naming parameters. In Resolve 3.0 SMIB is named: DBSName concatenated with an integer number. The integer number is used after the second instance is created. |
| | Not Defined | Counting | SPL | Determine the number of application database spaces based on the SMIB Counting parameter. In Resolve 3.0, the number of database spaces for SMIB DBS Blade is set to default, e.g. 1. |
| SIB | SIB_CalcSize | Sizing | SPL | Calculates the size of an instance of SIB database space type using the SIB Sizing parameters. In Resolve 3.0 the SIB is calculated: ( NumObject * NumSumDays *<TBD* ?> Kbytes ) + ( NumObject * NumSumMons <*TBD ?*> Kbytes ) |
| | Base_GenName | Naming | SPL | Generate a unique name for each instance of SIB database space type using the SIB Naming parameters. In Resolve 3.0 SIB is named: DBSName concatenated with an integer number. The integer number is used after the second instance is created. |
| | Not Defined | Counting | SPL | Determine the number of application database spaces based on the SIB Counting parameter. In Resolve 3.0, the number of database spaces for SIB DBS Blade is set to default, e.g. 1. |
| PHYLOG | Base_CalcSize | Sizing | SPL | Calculates the size of an instance of PHYLOG database space type using the PHYLOG Sizing parameters. In Resolve 3.0 the PHYLOG is calculated: If NumObject =< 20,000 then size is equal to <*TBD ?*> If 20,000 < NumObject =< 80,000 then size is equal to <*TBD ?*> If 80000 < NumObject =< 125,000 then size is equal to <*TBD ?*> |
| | Base_GenName | Naming | SPL | Generate a unique name for each instance of PHYLOG database space type using the PHYLOG Naming parameters. In Resolve 3.0 PHYLOG is named: DBSName concatenated with an integer number. The integer number is used after the second instance is created. |
| | Not Defined | Counting | SPL | Determine the number of application database spaces based on the PHYLOG Counting parameter. In Resolve 3.0, the number of database spaces for LOGICLOG DBS Blade is set to default, e.g. 1. |
| LOGICLOG | Base_CalcSize | Sizing | SPL | Calculates the size of an instance of LOGICLOG database space type using the LOGICLOG Sizing parameters. In Resolve 3.0 the LOGICLOG is calculated: If NumObject =< 20,000 then size is equal to <*TBD ?*> If 20,000 < NumObject =< 80,000 then size is equal to <*TBD ?*> If 80000 < NumObject =< 125,000 then size is equal to <*TBD ?*> |
| | Base_GenName | Naming | SPL | Generate a unique name for each instance of LOGICLOG database space type using the LOGICLOG Naming parameters. In Resolve 3.0 LOGICLOG is named: DBSName concatenated with an integer number. The integer number is used after the second instance is created. |
| | Not Defined | Counting | SPL | Determine the number of application database spaces based on the LOGICLOG Counting parameter. In Resolve 3.0, the number of database spaces for LOGICLOG DBS Blade is set to default, e.g. 1. |
| TEMP | Base_CalcSize | Sizing | SPL | Calculates the size of an instance of TEMP database space type using |
| | | | | the TEMP Sizing parameters. In Resolve 3.0 the TEMP is calculated: If NumObject =< 20,000 then size is equal to <*TBD ?*> If 20,000 < NumObject =< 80,000 then size is equal to <*TBD ?*> If 80000 < NumObject =< 125,000 then size is equal to *<TBD ?*> |
| | Base_GenName | Naming | SPL | Generate a unique name for each instance of TEMP database space type using the TEMP Naming parameters. In Resolve 3.0 TEMP is named: DBSName concatenated with an integer number. The integer number is used after the second instance is created. |
| | Not Defined | Counting | SPL | Determine the number of application database spaces based on the TEMP Counting parameter. In Resolve 3.0, the number of database spaces for TEMP DBS Blade is set to default, e.g. 1. |
| HIB | Base_CalcSize | Sizing | SPL | Calculates the size of an instance of HIB database space type using the HIB Sizing parameters. In Resolve 3.0 the HIB is calculated: If NumObject =< 20,000 then size is equal to <*TBD ?*> If 20,000 < NumObject =< 80,000 then size is equal to <*TBD ?*> |
| | | | | If 80000 < NumObject =< 125,000 then size is equal to <*TBD ?*> |
| | Base_GenName | Naming | SPL | Generate a unique name for each instance of HIB database space type using the HIB Naming parameters. In Resolve 3.0 HIB is named: DBSName concatenated with an integer number. The integer number is used after the second instance is created. |
| | Not Defined | Counting | SPL | Determine the number of application database spaces based on the HIB Counting parameter. In Resolve 3.0, the number of database spaces for HIB DBS Blade is set to default, e.g. 1. |
| SIBEUDBS | Base_CalcSize | Sizing | SPL | Calculates the size of an instance of SIBEUDBS database space type using the SIBEUDBS Sizing parameters. In Resolve 3.0 the SIBEUDBS is calculated: If NumObject =< 20,000 then size is equal to <*TBD ?*> If 20,000 < NumObject =< 80,000 then size is equal to <*TBD ?*> If 80000 < NumObject =< 125,000 then size is equal to <*TBD ?*> |
| | Base_GenName | Naming | SPL | Generate a unique name for each instance of SIBEUDBS database space type using the SIBEUDBS Naming parameters. In Resolve 3.0 |
| | | | | SIBEUDBS is named: DBSName concatenated with an integer number. The integer number is used after the second instance is created. |
| | Not Defined | Counting | SPL | Determine the number of application database spaces based on the SIBEUDBS Counting parameter. In Resolve 3.0, the number of database spaces for SMINEUDBS DBS Blade is set to default, e.g. 1. |
| HIBEVENT | QOS_CalcSize | Sizing | SPL | Calculates the size of an instance of HIBEVENT database space type using the HIBEVENT Sizing parameters. In Resolve 3.0 the HIBEVENT is calculated: NumObject * NumEvent * <*TBD ?*> Kbytes. |
| | QOS_Stat_GenName | Naming | SPL | Generate a unique name for each instance of HIBEVENT database space type using the HIBEVENT Naming parameters. In Resolve 3.0 HIBEVENT is named: DBSName concatenated with an integer number. The integer number is used with the first instance. |
| | QOS_Stat_CalcCount | Counting | SPL | Determine the number of application database spaces based on the "Days" Counting parameter. In Resolve 3.0, the number of database spaces for HIBEVENT DBS Blade is equal to "Days". |
| HIBOLDSTATE | QOS_CalcSize | Sizing | SPL | Calculates the size of an instance of HIBOLDSTATE database space type using the HIBOLDSTATE Sizing parameters. In Resolve 3.0 the HIBOLDSTATE is calculated: NumObject * NumEvent * <*TBD ?*> Kbytes. |
| | QOS_Stat_GenName | Naming | SPL | Generate a unique name for each instance of HIBOLDSTATE database space type using the HIBOLDSTATE Naming parameters. In Resolve 3.0 HIBOLDSTATE is named: DBSName concatenated with an integer number. The integer number is used with the first instance. |
| | QOS_Stat_CalcCount | Counting | SPL | Determine the number of application database spaces based on the "Days" Counting parameter. In Resolve 3.0, the number of database spaces for HIBOLDSTATE DBS Blade is equal to "Days". |
| ATMPVC | Stat_CalcSize | Sizing | SPL | Calculates the size of an instance of ATMPVC database space type using the ATMPVC Sizing parameters. In Resolve 3.0 the ATMPVC is calculated: NumObject * NumAttr * <*TBD ?*> Kbytes. |
| | QOS_Stat_GenName | Naming | SPL | Generate a unique name for each instance of ATMPVC database space type using the ATMPVC Naming parameters. In Resolve 3.0 ATMPVC is named: DBSName concatenated with an integer number. The integer number is used with the first instance. |
| | QOS_Stat_CalcCount | Counting | SPL | Determine the number of application database spaces based on the "Days" Counting parameter. In Resolve 3.0, the number of database spaces for ATMPVC DBS Blade is equal to "Days". |
| FRPVC | Stat_CalcSize | Sizing | SPL | Calculates the size of an instance of FRPVC database space type using the FRPVC Sizing parameters. In Resolve 3.0 the FRPVC is calculated: NumObject * NumAttr * <*TBD ?*> Kbytes. |
| | QOS_Stat_GenName | Naming | SPL | Generate a unique name for each instance of FRPVC database space type using the FRPVC Naming parameters. In Resolve 3.0 FRPVC is named: DBSName concatenated with an integer number. The integer number is used with the first instance. |
| | QOS_Stat_CalcCount | Counting | SPL | Determine the number of application database spaces based on the "Days" Counting parameter. In Resolve 3.0, the number of database spaces for FRPVC DBS Blade is equal to "Days". |
| FRUNI | Stat_CalcSize | Sizing | SPL | Calculates the size of an instance of FRUNI database space type using the FRUNI Sizing parameters. In Resolve 3.0 the FRUNI is calculated: NumObject * NumAttr * <*TBD ?*> Kbytes. |
| | QOS_Stat_GenName | Naming | SPL | Generate a unique name for each instance of FRUNI database space type using the FRUNI Naming parameters. In Resolve 3.0 FRUNI is named: DBSName concatenated with an integer number. The integer number is used with the first instance. |
| | QOS_Stat_CalcCount | Counting | SPL | Determine the number of application database spaces based on the "Days" Counting parameter. In Resolve 3.0, the number of database spaces for FRUNI DBS Blade is equal to "Days". |
| | | | | |
| | | | | |
| | | | | |
| | | | | |

All the operation routines for Resolve 3.0 shall be defined in "${RESOLVEHOME}/extend/ResDBSBlade.oper" file.

### DSM utility Configuration Files

This section describes the configuration files required by all or some DSM commands. There are two configuration files for the DSM utility:
- A general configuration file used by all DSM commands.
- A disk configuration file that is used only by commands to add, replace, and delete physical disks to an application.

### DSM Physical Disk Configuration File

The physical disk configuration file contains information about the physical disks on which the DSM stores the application-defined database spaces.

The DSM utility reads the disk configuration file and configures itself based on its information. The disk configuration file shall be called any name, and be located anywhere on the system. The disk configuration file shall be formatted according to the template described in Figure 3-6. 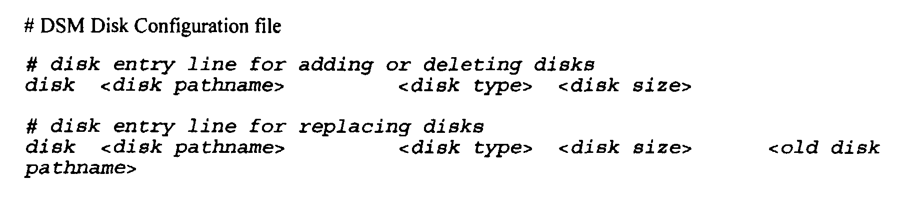 *disk:* a keyword by which the DSM utility identifies the entry to be the definition of a physical disk.
<*disk pathname*>: an absolute path to a UFS file or a Unix raw partition to be used as a disk to store database spaces.
*<disk type>:* the type of the physical disk. "c" is for UFS file, and "r" is for Unix raw partition.
*<disk size>:* the size of the physical disk in Kbytes.
*<old disk pathname> :* an absolute path to a UFS file or a Unix raw partition. This is the disk that used to retain database spaces, but is going to be replaced by <*disk pathname*>. A valid disk entry line for add-disk and delete-disk commands shall be composed of four TAB-separated fields. A valid disk entry line for replace-disk command shall be composed of five TAB-separated. Entry lines with # at the beginning shall be treated as comment. Blank lines shall be ignored. The following is the content of a sample disk configuration file.

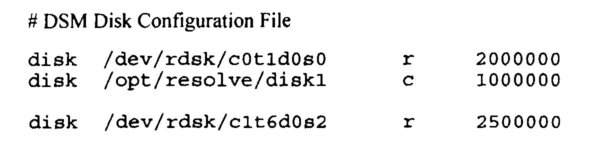

### DSM General Configuration File

The general configuration settings are defined and set in the DSM configuration file. All DSM processes shall read the DSM configuration file. The configuration file shall reside in $DSMHOME/etc directory. The configuration file shall be named "dsm_common,cfg". The configuration file shall be formatted according to section 3.1.5.4 in [4]. The DSM configuration file shall include following logging entries:
- **log_keep:** an integer number of log files to keep.
- **log_size:** an integer indicating the size (in bytes) of each log file.
- **log_minimum:** and integer indicating the minimum error level of log messages to keep.
- **mail_users:** a character string indicating user to mail severe error messages to
- **mail_level:** a character string indicating the lowest level of messages to mail.

The configuration file shall contain the following configuration settings:
- **DSMHOME:** The home directory for DSM utility. In the first release of DSM utility the DSMHOME shall be set to RESOLVEHOME.
- **INFORMIXDIR:** The path to the informix home directory.
- **INFORMIXSERVER:** The Informix database server name.
- **ONCONFIG:** The path to Informix configuration file.
- **INFORMIXUSER:** The name of the informix user.
- **INFORMIXPASSWD:** The password of the informix user.
- **DBSBLADEPATH:** The absolute path name to where DBS Blades files are located. This shall be set to $DSMHOME/extend.
- **LINKDIR:** Each application has a directory in $LINKDIR where the symbolic links to its physical disks are stored. The DSM utility uses the symbolic link names when creating database spaces for each application.
- **DISKGRACEMARGIN:** A disk space percentage left intact at the end of each configured physical disk. This is only effective for disk spaces configured through add-disk and replace-disk commands.

Figure 3-8 demonstrates the content of a sample DSM configuration file.

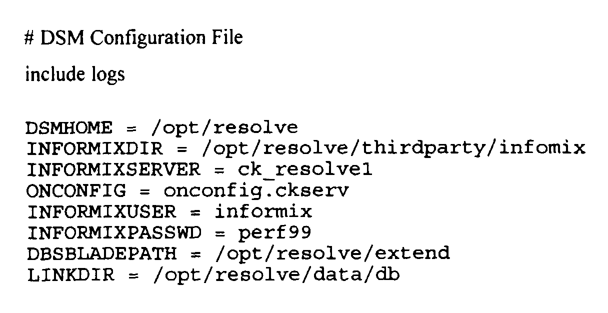

### DSM Utility Command Line Interface

This section describes the detailed functionality of Resolve DSM commands. There are three categories of commands: administrative, operational and informative commands.

The administrative commands help the administrator in DBS Blade management, physical disk management, and synchronization with Informix Servers.

The operational commands help the administrator to size, create, update the size of, and delete application-defined database spaces.

The informative commands help all users to get information about the DSM configuration status such as managed DBS Blades, DBS Blade groups, application-defined database spaces, and physical disks.

All DSM commands shall check for the proper syntax of the command line. If the syntax is not set properly, the command shall raise "Invalid Syntax" exception.

All DSM commands shall validate the user who has invoked the command. If the user is not one of the trusted users according to the "Security" section of this document, the command shall raise "NoValidUser" exception.

All DSM commands shall connect to the "sysmaster" and "dsmdb" databases once invoked by the user. If the attempt to connect to the databases fails, the command shall raise "NoDBConnect" exception.

All DSM commands shall read the DSM configuration file once invoked by the user. If the attempt to read the configuration file fails, the command shall raise "NoCfgFile" exception.

In all above cases the operation shall be ceased after an exception is raised. After an exception is raised, the state of the DSM utility (its database) shall be restored to its previous state before executing the command.

### Register Command

**Purpose:** The register command is used for adding a DBS Blade module (application database space type) to the DSM utility. It also used to upgrade/downgrade a DBS Blade. **Syntax:** The command line interface for the register command shall provide the following syntax:
<TBD Choose between the two>
1. dsm_register *<Application Name> <DBS Blade Description Filename>* [-e -f *<operation file>]*
2. dsm register *<Application Name> <DBS Blade Description Filename>* [-e -f *<operation file>]*
*<Application Name>:* The name of an application to which the DBS Blade belong. It is a null terminated character string of maximum length 30.
<*DBS Blade Description Filename*>: the description file for the DBS Blade to be registered.
- e : the enforce option that demands overwriting of the registered version of the DBS Blade with another version of it.
- f : the option that specifies the location of the DBS Blade operation file.
*<operation file>:* the DBS Blade operation file in which the operation routines are defined.

### Examples:

### dsm_register Resolve/opt/resolve/extend/SMIB. 1. desc -e -f /opt/resolve/extend/ResDBSBlade. oper

### Description:

The register command is an administrative command. It shall be used to register a new version of an application-defined DBS Blade module with the DSM utility. While registering a DBS Blade with the register command, the DSM utility shall check for two files in the ${DSMHOME}/extend directory: DBS Blade configuration file and DBS Blade description file. If the configuration file does not exist or the register command can not read it, exception "NoBladeCfgFile" shall be raised. If the description file does not exist or the register command can not read it, exceptions "NoBladeDescFile" shall be raised.

The register command shall read the description file, and stores its information in the DSM database. If a syntax error is discovered while reading the description file, the register command shall raise "SyntaxBladeDescFile" exception. If the information can not be stored in the DSM database, exception "DescNotLoaded" shall be raised.

"-f" option specifies the DBS Blade operation file where the register command can find the body of the opertion routines.

The register command shall be able to read the specified operation file mentioned in the CL1, and loads the DBS Blade operation routines to the database server. If the specified operation file does not exist or the register command can not read it, exception "NoBladeOperFile" shall be raised.

If no operation file is specified for a DBS Blade through the register CLI, the register command assumes that some other DBS Blades have already registered the operation routines and this DBS Blade is going to re-use them. In this case, the register command shall ensure that the interfaces of those operation routines conform to the ones defined by this DBS Blade.

While registering an operation, the register command shall verify the name and interface of the operation routine. If the operation routine is new (no routine with the same name exist before), the register command shall register the operation routine for the DBS Blade and load it into the server. If an operation routine with the same name but a different interface exists, the register command shall not load the routine and shall raise "OperNotLoaded" exception. If an operation routine with the same name and interface exists, the register command shall mark the routine as being re-used by the DBS Blade.

If a syntax error is discovered while reading an operation file, the register command shall raise "SyntaxBladeOperFile" exception. If the operation routines can not be loaded on the Informix server, the exception "OperNotLoaded" shall be raised.

If the operation names (routines) as defined in the DBS Blade description file can not be found either on the server or in the operation file, the register command shall raise "BladeOperNotFound" exception.

The "-e" option enforces the DSM utility to attempt a new registration for a DBS Blade. The register command reads the $DSMHOME/extend directory to locate the DBS Blade description and configuration files. Using the version information in the description file, the register command shall recognize if another version of the DBS Blade is registered or not. If no other version of the DBS Blade is registered, the register command shall perform a normal registration. If the "-e" option is not specified, and the user attempts to re-register any version of an already-registered DBS Blade, the exception "BladeAlrdyRegisered" shall be raised.

If "-e" option is specified, and the user attempts to re-register the same version of a DBS Blade, exception "BladeAlrdyRegisered" shall be raised. If "-e" option is specified and the user attempts to register another version of a DBS Blade, the register command shall update the DBS Blade description and operation information in the DSM database. A DBS Blade shall be able to update its operation routines regardless of being used by other DBS Blades, when the "-e" option is specified.

If the DBS Blade description information can not be updated in the DSM database, the register command shall raise "DescNotLoaded" exception. If the DBS Blade operation information can not be updated on the database server, the register command shall raise "OperNotLoaded" exception.

If the register command can not update the DBS Blade information in the DSM database, the exception "BladeNotRegistered" shall be raised.

There shall be always only one version of a DBS Blade registered with the DSM utility.

In all above cases the operation shall be ceased after an exception is raised. After an exception is raised, the state of the DSM utility (its database) shall be restored to its previous state before executing the register command.

After a successful operation, the register command shall inform user about the success of the operation.

For more information on the messages and exceptions refer to the "DSM utility Logging and Error-Handling" section.

**Return Values:** The register command shall return 0 on the successful operation. In case of failure, the register command shall return negative values corresponding to the exception raised.

### Unregister Command

**Purpose:** The unregister command is to remove a DBS Blade module from DSM utility. A DBS Blade module can not be removed if used by the DSM utility.

**Syntax:** The command line interface for the unregister command shall provide the following syntax:
<TBD Choose between the two>
1. dsm_unregister <*DBS Blade Name*>
2. dsm unregister <*DBS Blade Name*>

### <DBS Blade Name>: the name of a DBS Blade to be unregistered.

### Examples:

### dsm_unregister SMIB. 1

**Description:** The unregister command is an administrative command. It shall be used to unregister a DBS Blade from the DSM utility.

The unregistering of a DBS Blade shall occur only if the DBS Blade is not being used by any database spaces. If a database space is using a DBS Blade, the unregister command shall raise "BladeInUse" exception.

The unregister command shall remove the DBS Blade descriptions from the DSM database. If the DBS Blade descriptions can not be removed from the database, the unregister command shall raise "DescNotUnLoaded" exception. The unregister command shall remove the DBS Blade operation routines from the database server. If the DBS Blade operation routines can not be removed from the database server, the unregister command shall raise "OperNotUnLoaded" exception.

If the unregister command can not update the DBS Blade information in the DSM database, the exception "BladeNotUnregistered" shall be raised.

In all above cases the operation shall be ceased after an exception is raised. After an exception is raised, the state of the DSM utility (its database) shall be restored to its previous state before executing the unregister command.

After a successful operation, the unregister command shall inform user about the success of the operation.

For more information on the messages and exceptions refer to the "DSM utility Logging and Error-Handling" section.

**Return Values:** The unregister command shall return 0 on the successful operation. In case of failure, the unregister command shall return negative values corresponding to the exception raised.

### Add Disk Command

**Purpose:** The add-disk command is to assign physical disks to the DSM utility on which application database spaces are stored.

**Syntax:** The command line interface for the Add Disk command shall provide the following syntax:
<TBD Choose between the three>
*1*. dsm_adddisk -a *<Application Name> -p <Disk Path> -t <Disk Type> -s <Disk Size>* dsm_adddisk -a *<Application Name> -f <Disk Configuration File>*
*2*. dsm adddisk -a *<Application Name> -p <Disk Path> -t <Disk Type> -s <Disk Size>* dsm adddisk -a *<Application Name> -f <Disk Configuration File>*
3. dsm_diskconfig -add -a *<Application Name> -p <Disk Path> -t <Disk Type> -s <Disk Size>*
   dsm_diskconfig -add -a <Application Name> -f *<Disk Configuration File>*
*<Application Name>:* The name of an application for which the physical disk(s) are allocated. It is a null terminated character string of maximum length 30.
*<Disk Path>:* The absolute pathname of a UFS file, or Unix raw partition on which the application database spaces can be allocated. It shall support maximum path length supported by Unix.
*<Disk Type>:* The type of a physical disk. It can be either "c" as a UFS file or "r" as a Unix raw partition.
*<Disk Size>:* The size of a physical disk in Kbytes.
*<Disk Configuration File>:* The absolute pathname to a physical disk configuration file. It is used for adding multiple physical disks for an application.

### Examples:

dsm_adddisk -a *Resolve -*p*/dev/rdsk/c1t6d0s2 -*t *r -s 2500000* dsm_adddisk -a *Resolve -*f*/opt/resolve/etc/diskconfig*

**Description:** The add-disk command is an administrative command. The add-disk command shall assign physical disks to the DSM utility to be used for database spaces of a specific application. The disk information pertaining to a physical disk includes disk path, disk size, disk type, and application name.

The add-disk command shall be able to obtain disk information for an application in two ways: through the command line interface or through the disk configuration file. The add-disk command shall be able to read the disk configuration file. If the specified configuration file does not exist or does not have the proper read and write permission, the add-disk command shall raise "NoDiskCfgFile" exception, and cease the operation. If add-disk command can not process an entry line in the disk configuration file, it shall skip that line and continue the processing. The add-disk command shall also inform user of skipping that line.

If there is a syntax error for an entry line in the disk configuration file, the add-disk command shall raise "SyntaxDiskCfgFile" exception, and ignore that entry line.

The add-disk command shall validate the disk pathname for each disk that it adds. If the pathname does not exist or does not have the appropriate read and write permissions, the add-disk command shall raise "InvalidPathName" exception.

The add-disk command shall validate the disk type for each disk that it adds. If the specified type does not match the actual type of the disk or is not one of the supported types: "c" or "r", the add-disk shall raise "InvalidDiskType" exception.

The add-disk command shall validate the disk size for each disk that it adds. If the actual disk size is zero and the type is "c", the add-disk shall allocate disk space with the specified size. If the add-disk can not allocate the disk space with the specified size, it shall raise "NotEnoughSpace" exception. If the actual size of a disk is not zero or the disk type is "r", the add-disk shall only verify the actual size of the disk. If the actual size is less than the specified size, the add-disk command shall raise "NotEnoughSpace" exception. If the actual size is equal or greater than the specified size, the add-disk command shall use the actual size.

If add-disk can not insert the disk information in the DSM database, the exception "DiskNotAdded" shall be raised.

The add-disk command shall not accept an already configured disk as a valid disk. If the physical disk has already been configured in the DSM utility, the add-disk shall raise "DiskAlrdyConfigured" exception.

In case of assigning the disk(s) through the configuration file the operation shall ignore incorrect entry lines, and continue the processing when an exception is raised. If an entry line is ignored, it shall be such that all actions taken by the add-disk for that entry line are rolled back to a state as though the entry line never exist.

In case of assigning a disk through the command line interface the operation shall be ceased when an exception is raised. When an exception is raised, all actions taken by the add-disk for adding the disk are rolled back to a state as though the command was never issued.

After a successful operation, the add-disk command shall inform user about the success of the operation.

For more information on the messages and exceptions refer to the "DSM utility Logging and Error-Handling" section.

**Return Values:** The add-disk shall always return the number of disks successfully added to DSM utility.

### Delete Disk Command

**Purpose:** The delete-disk command is to de-assign physical disks from the DSM utility. If the physical disk still holds the application database spaces, it can not be removed from the DSM utility.

**Syntax:** The command line interface for the Delete Disk command shall provide the following syntax:
<TBD Choose between the three>
1. *dsm_deletedisk -*p *<Disk Path>*
   dsm_deletedisk -f *<Disk Configuration File>*
2. dsm deletedisk -p *<Disk Path>*
   dsm deletedisk -f *<Disk Configuration File>*
3. dsm_diskconfig -delete -p *<Disk Path>*
   dsm_diskconfig -delete -f *<Disk Configuration File>*
*<Disk Path>:* The absolute pathname of a UFS file, or Unix raw partition on which the application database spaces can be allocated. It shall support maximum path length in Unix.
*<Disk Configuration File>:* The absolute pathname to a physical disk configuration file. It is used for deleting multiple physical disks for an application.

### Examples:

### dsm_deletedisk -p/dev/rdsk/c0t1d0s1

### dsm_deletedisk -f/opt/resolve/etc/diskconfig

### Description:

The delete-disk command is an administrative command. The delete-disk command shall de-assign physical disks from the DSM utility. The delete-disk command shall only de-assign physical disks on which no application database space is located. If the physical disk is used by an application database space, the delete-disk shall raise "DiskInUse" exception.

The delete-disk command shall be able to obtain disk information in two ways: through the command line interface or through the disk configuration file.

The delete-disk command shall be able to read the disk configuration file. If the specified configuration file does not exist or does not have the proper read and write permission, the delete-disk command shall raise "NoDiskCfgFile" exception, and cease the operation. If delete-disk command can not process an entry line in the disk configuration file, it shall skip that line and continue the processing. The delete-disk command shall also inform user of skipping that line.

If there is a syntax error for an entry line in the disk configuration file, the delete-disk command shall raise "SyntaxDiskCfgFile" exception, and ignore that entry line.

The delete-disk command shall validate the disk pathname for each disk that it de-assigns. If the pathname does not exist or does not have the appropriate read and write permissions, the delete-disk command shall raise "InvalidPathName" exception.

The delete-disk command shall not remove the actual data from the disk. It shall only update its internal information about the de-assigned disks. If the delete-disk can not remove the disk information from the DSM database, the exception "DiskNotDeleted" shall be raised.

If the requested physical disk for deletion has never configured for DSM utility, the delete-disk shall raise "DiskNotConfigured" exception.

In case of de-assigning the disk(s) through the configuration file the operation shall ignore incorrect entry lines, and continue the processing when an exception is raised. If an entry line is ignored, it shall be such that all actions taken by the delete-disk for that entry line are rolled back to a state as though the entry line never exist.

In case of de-assigning a disk through the command line interface the operation shall be ceased when an exception is raised. When an exception is raised, all actions taken by the delete-disk for de-assigning the disk are rolled back to a state as though the command was never issued.

After a successful operation, the delete-disk command shall inform user about the success of the operation.

For more information on the messages and exceptions refer to the "DSM utility Logging and Error-Handling" section.

**Return Values:** The delete-disk shall always return the number of disks successfully deleted from DSM utility.

### 1.1.1.1 Replace Disk Command

**Purpose:** The replace-disk command is used for replacing configured disks with new ones when a disk crash occurs. The replace-disk command only updates the physical disk information and does not restore users' data back to the database spaces.

**Syntax:** The command line interface for the Replace Disk command shall provide the following syntax:
<TBD Choose between the three>
1. dsm_replacedisk -p *<Disk Path >* -t *<Disk Type>* -s *<Disk Size>* -d *<Old Disk path>*
   dsm_replacedisk -f *<Disk Configuration File>*
2. dsm replacedisk -p *<Disk Path >* -t *<Disk Type>* -s *<Disk Size>* -d *<Old Disk path>* dsm replacedisk -f *<Disk Configuration File>*
3. dsm_diskconfig -replace -p *<Disk Path>* -t *<Disk Type>* -s *<Disk Size>* -d *<Old Disk path>*
   dsm_diskconfig -replace -f *<Disk Configuration File>*
*<Disk Path>:* The absolute pathname of a UFS file, or Unix raw partition on which the application database spaces are going to be allocated. It shall support maximum path length in Unix.
*<Disk Type>:* The type of a physical disk. It can be either "c" as a UFS file or "r" as a Unix raw partition.
*<Disk Size>:* The size of a physical disk in Kbytes.
*<Old Disk path>:* The absolute pathname of a UFS file, or Unix raw partition on which application database spaces are allocated. It shall support maximum path length in Unix.
*<Disk Configuration File>:* The absolute pathname to a physical disk configuration file. It is used for replacing multiple physical disks for an application.

### Examples:

### dsm_replacedisk -p/dev/rdsk/c0t1d0s2 -t r -s 2500000 -d/dev/rdsk/c0t2d1s4

### dsm_replacedisk -f/opt/resolve/etc/diskconfig

### Description:

The replace-disk command is an administrative command. The replace-disk command shall update the information pertaining to a configured disk with a new one. The disk information includes disk path, disk size, disk type, application name, and database chunk symbolic links. This command is to be used when a physical disk crash occurs. The replace-disk shall not replace the user data stored in the database spaces. It shall only update its internal data in DSM database, and re-create database chunks equivalent to those that were located on the failed disk.

The *<Disk Path>* shall be either the same as the *<Old Disk Path>* or a new path that has never configured for DSM utility. If the physical disk has already been configured in the DSM utility, the replace-disk shall raise "DiskAlrdyConfigured" exception.

The replace-disk command shall be able to obtain disk information for an application in two ways: through the command line interface or through the disk configuration file. The replace-disk command shall be able to read the disk configuration file. If the specified configuration file does not exist or does not have the proper read and write permission, the replace-disk command shall raise "NoDiskCfgFile" exception, and cease the operation.

If replace-disk command can not process an entry line in the disk configuration file, it shall skip that line and continue the processing. The replace-disk command shall also inform user of skipping that line.

If there is a syntax error for an entry line in the disk configuration file, the replace-disk command shall raise "SyntaxDiskCfgFile" exception, and ignore that entry line.

The replace-disk command shall validate the disk pathname for each disk that it replaces.

If the pathname does not exist or does not have the appropriate read and write permissions, the replace-disk command shall raise "InvalidPathName" exception.

The replace-disk command shall validate the disk type for each disk that it replaces. If the specified type does not match the actual type of the disk or is not one of the supported types: "c" or "r", the replace-disk shall raise "InvalidDiskType" exception.

The replace-disk command shall validate the disk size for each disk that it replaces. The replace-disk shall not replace disks whose actual size is less than those of the previous counterparts shall. If the actual size of a new disk is less than the actual size of the disk it replaces, the replace-disk shall raise "SizeNotMatched" exception.

If the actual disk size is zero and the type is "c", the replace-disk shall allocate disk space with the specified size. If the replace-disk can not allocate the disk space with the specified size, it shall raise "NotEnoughSpace" exception.

If the actual disk size is not zero or the disk type is "r", the replace-disk shall only verify the actual disk size and not allocate the disk space. In this case, if the actual disk size is less than the specified size, the replace-disk command shall raise "NotEnoughSpace" exception. Also, If the actual disk size is equal or greater than the specified size, the replace-disk command shall update its database with the new actual disk size.

The replace-disk command shall update the chunk symbolic links maintained in ${DSMHOME}/<Application> to point to the new disk. For further information refer to create command. If the replace-disk command can not update the chunk symbolic links, it shall raise "LinkFailed" exception.

If the replace-disk can not update the disk information in the DSM database, the exception "DiskNotReplaced" shall be raised.

In case of replacing the disk(s) through the configuration file the operation shall ignore incorrect entry lines, and continue the processing when an exception is raised. If an entry line is ignored, it shall be such that all actions taken by the replace-disk for that entry line are rolled back to a state as though the entry line never exist.

In case of replacing a disk through the command line interface the operation shall be ceased when an exception is raised. When an exception is raised, all actions taken by the replace-disk for replacing the disk are rolled back to a state as though the command was never issued.

After a successful operation, the replace-disk command shall inform user about the success of the operation.

For more information on the messages and exceptions refer to the "DSM utility Logging and Error-Handling" section.

**Return Values:** The replace-disk shall always return the number of disks successfully repalced to DSM utility.

### 1.1.1.2 Group Command

**Purpose:** The group command is to reduce the repetition of commands on separate DBS Blades by grouping them together. All the operational command that can be performed on a DBS Blade can be performed on DBS Blade group.

**Syntax:** The command line interface for the group command shall provide the following syntax:
<TBD Choose between the two>
1. dsm_group *<DBS Blade Group> <DBS Blade [, DBS Blade, ... ]>*
2. dsm group *<DBS Blade Group> <DBS Blade [, DBS Blade, ...]>*
*<DBS Blade>:* the name of a DBS Blade to be grouped.
*<DBS Blade Group>:* the name of a DBS Blade group.

### Examples:

### dsm_group QOS HIBEVENT,HIBOLDSTATE

**Description:** The group command is an administrative command. It shall be used to group two or more DBS Blades together. All the operational commands that can be performed on DBS Blades shall be performed on DBS Blade groups. Refer to the operational commands for further information.

If the group command shall not accept an already configured DBS Blade group as a valid DBS Blade group. If the DBS Blade group has already been configured in the DSM utility, the group command shall raise "GroupAlrdyConfigured" exception.

If the specified DBS Blades are not registered with the DSM utility yet, the group command shall raise "BladeNotExist" exception.

If the group command can not update the DBS Blade group information in the DSM database, it shall raise "GroupNotConfigured" exception.

When an exception is raised, all actions taken by the group command for grouping the DBS Blades are rolled back to a state as though the command was never issued. After a successful operation, the group command shall inform user about the success of the operation.

For more information on the messages and exceptions refer to the "DSM utility Logging and Error-Handling" section.

**Return Values:** The group command shall return 0 on the successful operation. In case of failure, the group command shall return negative values corresponding to the exception raised.

### Sync Command

**Purpose:** The sync command is to synchronize the DSM utility with Informix database space information and associate them with DBS Blades. Sync command enables the DSM utility to support database spaces that already exist on the system.

**Syntax:** The command line interface for the sync command shall provide the following syntax:
<TBD Choose between the two>
1. dsm_sync *[<DBS Blade>* -e *<naming regular expression>]*
2. dsm sync *[<DBS Blade>* -e *<naming regular expression>]*
<*DBS Blade*>: the name of a DBS Blade registered with DSM utility.
*<naming regular expression>:* a regular expression consisting of % special character and DBS Blade naming parameters that identifies a naming pattern for database spaces belonging to that DBS Blade. % special character stands for none or more characters.

### Examples:

### dsm_sync dsm_sync HIBEVENT-e "%DBSName%"

### Description:

The sync command is an administrative command. It gives the DSM utility the backward capability to manage database spaces that are previously created by Informix. The sync command is required not only to synchronize the DSM database with the Informix database spaces information, but also to associate the database spaces with the appropriate DBS Blades, and acquire physical disk information on which database chunks are located. The sync command shall be synchronize the DSM database with Informix "sysmaster" database. It shall synchronize the following Information:
- database space information
- chunk information
demonstrates the detailed information that shall be synchronized with Informix database server pertaining to each database space.

**Table -**

| Informix Detailed Information required for Synchronization | |
|---|---|
| **Detailed Information** | **Description** |
| Database space name | The unique name of the database space. This information is in sysdbspaces:sysdbspaces@sysmaster |
| Database space type | The type of the database space. This information is in sysdbspaces:is_temp@sysmaster. |
| Database space number | The unique number given to a database space by Informix. This information is in sysdbspaces:dbsnum@sysmaster. |
| Database space size | The size of the database space. This information is in sysdbspaces:dbssize@sysmaster. |
| Chunk number | The unique number given to a chunk by Informix. This information is in syschunks:chkname@sysmaster |
| Chunk path name | The path name where chunk is located. This can be a symbolic link. This information is located in syschunks:chkfname@sysmaster |
| Chunk offset | The offset of the chunk from the beginning of the chunk path |
| | name. This information is located in syschunks:offset@sysmaster |
| Chunk size | The size of the chunk. This information is located in syschunks:chksize@sysmaster |
| Chunk database space | The database space number to which chunk belong. This information is in syschunks:dbsnum@sysmaster |
| | |

The sync command shall also update the DSM utility with the information about all physical disks on which database chunks are located. demonstrates the detailed information that the sync command shall maintain.

**Table**

| Disk Detailed Information required for Synchronization | |
|---|---|
| **Detailed Information** | **Description** |
| Physical disk number | The unique identifier of the physical disk on which the chunk are located. This information is assigned by DSM utility to each physical disk. |
| Physical disk path | The absolute path name to physical disk on which chunks are located. If the chunk pathname is not a symbolic link, it will be the same as chunk pathname. The sync command shall obtain this information using the Chunk Path Name. |
| Physical disk size | The total size of a physical disk on which chunks are located. The sync command shall obtain this information using the physical disk pathname. |
| Physical disk type | The total size of a physical disk on which chunks are located. The sync command shall obtain this information using the physical disk pathname. |
| Physical disk used size | The total size of a physical disk on which chunks are located. The sync command shall maintain this information using the size of chunk located on that physical disk. |
| | |

The sync command shall also associate database spaces with the appropriate DBS Blade so that DSM utility will be able to manage the database spaces in the future.

The <DBS Blade> argument identifies the DBS Blade name for which the sync command shall be executed. In this case, The *<naming regular expression>* argument shall set so to identify a naming pattern for database spaces described by that DBS Blade.

With no arguments set, the sync command shall perform the sync for all registered DBS Blades. In this case, the default value for *<naming regular expression>* argument shall be used. The default for *<naming regular expression> is* "%<First Defined Naming Parameter>%". For example if "Name 1" is the first defined naming parameter for a DBS Blade, the default regular expression will be "%Name 1%". This regular expression identifies the naming pattern of database spaces defined by this DBS Blade.

If the specified DBS Blade is not registered with the DSM utility yet, the sync command shall raise "BladeNotExist" exception.

If the specified database spaces do not exist in the Informix sysmaster database, the sync command shall raise "DBSNotExist" exception.

If the sync command can not obtain all information pertaining to a specified database space including its chunks and physical disks, it shall raise "DBSInfoInComplete" exception.

If the sync command can not update all information pertaining to a specified database space including its chunk and physical disk information, it shall raise "DBSNotSync" exception.

When an exception is raised, all actions taken by the sync command for syncing an Informix database space with a DBS Blade are rolled back to a state as though the command was never issued.

After a successful operation, the sync command shall inform user about the success of the operation.

For more information on the messages and exceptions refer to the "DSM utility Logging and Error-Handling" section.

**Return Values:** The sync command shall return 0 on the successful operation. In case of failure, the sync command shall return negative values corresponding to the exception raised.

### Size Command

**Purpose:** The size command provides an approximate size of total disk space required for database spaces described by a DBS Blade or DBS Blade group. The size command is used before configuring the physical disks. Once the disk space size is determined, the user can configure the physical disks using the add-disk command and create database spaces on them.

**Syntax:** The command line interface for the group command shall provide the following syntax:
<TBD Choose between the two>
1. dsm_size <[*DBS Blade*|*DBS Blade Group*]> [-count <*number of instances*>] [<*param*-*name*=*param-value*> [<*param-name*=*param-value*> ...]]
2. dsm size <[*DBS Blade*|*DBS Blade Group*]> -count *<number of instances> [<param-name*=*param-value*> [<*param-name=param-value*> ...]]
<*DBS Blade*>: the name of a DBS Blade whose database spaces are sized.
*<DBS Blade Group>:* the name of a DBS Blade group whose database spaces are sized. -count: the option that overwrites the value returned by the counting operation.
*<number of instances>:* The number of database spaces to be sized.
*<param-name=param-value>:* the sizing and counting parameters as defined in the DBSBlade description file, and their values. This option is given to the user so that he can overwrites values for the sizing and counting parameters through the CLI instead of setting them in the DBS Blade configuration file.

### Examples:

### dsm_size QOS days=60

### dsm_size ATMPVC days =20 NumObject=2000 NumAttr=10

### Description:

The size command is an operational command. It can be performed on both DBS Blades and DBS Blade groups. The size command shall be able to calculate and provide an estimated disk size required for all database spaces described by a DBS Blade or DBS Blade group.

The size command shall use the following formula for estimating the disk size:
Estimated size = <number of instances> * Σsize(*DBS Blade*[i])

The size command shall calculate the required disk size for an instance of DBS Blade using the value set for the DBS Blade sizing parameter. Then it shall multiply the size by the number of database space instances. The size command shall use the counting operation defined by the DBS Blade in order to determine the number of database spaces to size. The size command shall be able to overwrite the counting operation when -count option is specified. The sizing and counting parameters shall be either set through the CLI or in the DBS Blade configuration file.

Every time the sizing exercise is performed, a history entry of the calculated size for each DBS Blade and the values of its sizing parameters shall be saved in the DSM database. This information will be used for debugging and maintenance purpose.

If the sizing is requested for a DBS Blade group, the size command shall sum the calculated size for all DBS Blades in that group.

If there is a syntax error for an entry line in the DBS Blade configuration file, the size command shall raise "SyntaxBladeCfgFile" exception.

If there is no value set for a required counting parameter, the size command shall raise "NoCountValue" exception. If the size command receive incorrect value type for a count parameter, it shall raise "InvalCountValue" exception.

If there is no value set for a required sizing parameter, the size command shall raise "NoSizeValue" exception. If the size command receive incorrect value type for a sizing parameter, it shall raise "InvalSizeValue" exception.

If the sizing parameter set through CLI is not related to the DBS Blade, for which the calculation is performed, the size command shall ignore that parameter. If the size command receive a DBS Blade or DBS Blade group as argument that are not registered yet, it shall raise "BladeNotExist" exception.

If the size command can not determine the number of database spaces using the DBS Blade counting operation, it shall raise "BladeNotCounted" exception.

If the size command can not calculate the size of a DBS Blade or DBS Blade group using the sizing operation, it shall raise "BladeNotSized" exception.

When an exception is raised, all actions taken by the size command for sizing an Informix database space with a DBS Blade are rolled back to a state as though the command was never issued.

After a successful operation, the size command shall inform user about the success of the operation.

For more information on the messages and exceptions refer to the "DSM utility Logging and Error-Handling" section.

**Return Values:** The size command shall return the estimated size of all database spaces described by DBS Blade or DBS Blade group on the successful operation.

In case of failure, the size command shall return negative values corresponding to the exception raised.

### Create Command

**Purpose:** The create command is for creating application-defined database spaces defined by each DBS Blade or DBS Blade group. The create command uses the counting, sizing and naming parameters and routines defined by each DBS Blade to size, name and number the database spaces.

**Syntax:** The command line interface for the create command shall provide the following syntax:
<TBD Choose between the two>
1. dsm_create <*[DBS Blade*|*DBS Blade Group]*> [-count *<number of instances>*] [-size *<size of an instance>*] [*<param-name=param-value>* [*<param-name=param-value>* ...]]
2. dsm create <[*DBS Blade*|*DBS Blade Group*]> [-count <*number of instances*>] [-size <*size of an instance*>] [<*param-name=param-value*> [<*param-name=param-value>* ...]]
*<DBS Blade>:* the name of a DBS Blade whose database spaces are created.
*<DBS Blade Group>:* the name of a DBS Blade group whose database spaces are created. -count: the option that overwrites the value returned by the counting operation.
*<number of instances>:* The number of database spaces to be created.
-size: the option whose value overwrites the value returned by the sizing operation.
*<size of an instance>:* the size of database space instance in Kbytes.
*<param-name=param-value>:* the sizing, counting or naming parameters as defined in the DBSBlade description file, and their values. This option is given to the user so that he can overwrites values for the sizing/naming/counting parameters through the CLI instead of setting them in the DBS Blade configuration file.

### Examples:

### dsm_create Base NumObject=125000

### dsm_create ATMPVC NumObject=50000 NumAttr=5 days=50

### Description:

The create command is an operational command. Like any other operational command, it can be performed on both DBS Blades and DBS Blade groups. The create command shall create application-defined database spaces defined by each DBS Blade or DBS Blade group. The create command shall use the counting parameters and operation to determine the number of database space instances to create. The -count option shall give the user capability to overwrites the number of database space instances returned by counting routine.

Prior to creating database spaces, the create command shall determine the number of database space instances to create. It shall also calculate the size of disk space for each database space, and determine the number and size of database chunks required by each database space. The create command shall verify the availability of physical disk for the required database chunks. If the required disk space is not available, the create command shall raise "NotEnoughSpace" exception.

The create command shall use the counting operation defined by the DBS Blade or DBS Blade group in order to determine the number of database spaces to create. The value of counting parameters shall be set either through the CLI or in the configuration file. The create command shall be able to overwrite the counting operation when -count option is specified.

The create command shall use the sizing operation defined by the DBS Blade or DBS Blade group in order to calculate the size of the database space. The value of sizing parameters shall be set either through the CLI or in the configuration file. The create command shall be able to overwrite the sizing operation when -size option is specified.

Every time the sizing exercise is performed, a history entry of the calculated size for each DBS Blade and the values of its sizing parameters shall be saved in the DSM database.

This information will be used for debugging and maintenance purpose.

The create command shall use the naming operation defined by the DBS Blade or DBS Blade group to generate a unique name for each database space. The value of naming parameters shall be set either through the CLI or in the configuration file.

The DSM utility shall give each database chunk a unique symbolic link name. For naming a chunk, the DSM utility shall use the name of the database space to which chunk belong and concatenate it with an integer number.

The DSM utility shall create a symbolic link to each disk on which a chunk is located. This is recommended by Informix and helps when a physical disk crash occurs. The DSM utility shall maintain the link files of each application in ${LINKDIR}/<Application> directory.

The create command shall use Informix "onspaces" command to create database space or database chunks.

If there is a syntax error for an entry line in the DBS Blade configuration file, the create command shall raise "SyntaxBladeCfgFile" exception.

If the create command receive a DBS Blade or DBS Blade group as argument that are not registered yet, it shall raise "BladeNotExist" exception.

If there is no value set for a required counting parameter, the create command shall raise "NoCountValue" exception. If the create command receive incorrect value type for a count parameter, it shall raise "InvalCountValue" exception.

If there is no value set for a required sizing parameter, the create command shall raise "NoSizeValue" exception. If the create command receive incorrect value type for a sizing parameter, it shall raise "InvalSizeValue" exception.

If there is no value set for a required naming parameter, the create command shall raise "NoNameValue" exception. If the create command receive incorrect value type for a sizing parameter, it shall raise "InvalNameValue" exception.

If the create command can not determine the number of database spaces using the DBS Blade counting operation, it shall raise "BladeNotCounted" exception.

If the create command can not calculate the size of each database space using the DBS Blade sizing operation, it shall raise "BladeNotSized" exception.

If the create command can not generate a unique name for each database space instance using the DBS Blade naming operation, it shall raise "BladeNotNamed" exception.

If the create command can not create/maintain the symbolic link files, it shall raise "LinkFailed" exception.

If the create command can not create database spaces using Informix "onspaces" command, it shall raise "OnspacesFailed" exception.

When an exception is raised, all actions taken by the create command for creating a database space are rolled back to a state as though the command was never issued for that database space.

After a successful operation, the create command shall inform user about the success of the operation.

For more information on the messages and exceptions refer to the "DSM utility Logging and Error-Handling" section.

**Return Values:** The create command shall return number of database spaces created successfully.

The create command shall return negative values corresponding to the exception raised in case of failure.

### Update Command

**Purpose:** The update command is used for updating the size of application-defined database spaces defined by a DBS Blade or DBS Blade group. The update command uses the application-defined sizing parameters and operation described by a DBS Blade or DBS Blade group to obtain the new size of each database space. The update command only updates the size of database spaces whose new size is greater than the exiting size. The update command can also update the size of each database space separately. **Syntax:** The command line interface for the update command shall provide the following syntax:
<TBD Choose between the two>
1. dsm_update <*[DBS Blade*|*DBS Blade Groups database space number]>* [-size *<size of an instance*>] [<param-name=param-value> [<param-name=param-value> ...] ]
2. dsm update <*[DBS Blade*|*DBS Blade Group*|*database space number]>* [-size *<size of an instance*>] [*<param-name=param-value>* [*<param-name=param-value>* ...] ]
*<DBS Blade>:* the name of a DBS Blade whose database space size is to be updated.
*<DBS Blade Group>:* the name of a DBS Blade group whose database space size is to be updated.
*<database space number>:* The unique number identifying a database space whose size is to be updated.
-size: the option whose value overwrites the value returned by the sizing operation. *<size of an instance>:* the size of database space instance in Kbytes.
*<param-name=param-value> :* the sizing parameters as defined in the DBSBlade description file, and their values. This option is given to user so that he can overwrites values for the sizing parameters through the CLI instead of setting them in the DBS Blade configuration file.

### Examples:

### dsm_update Base NumObject=50000

### dsm_update ATMPVC NumObject=30000 NumAttr=12

### Description:

The update command is an operational command. The update command shall update the size of database spaces described by a DBS Blade or DBS Blade group. Also, the update command shall be able to update the size of a specific database space using its unique identifier.

Prior to updating the size of databasc spaces, the update command shall calculate the new size based on the new values of sizing parameters. The update command shall verify the availability of physical disk for the required database chunks. If the required disk space is not available, the update command shall raise "NotEnoughSpace" exception.

Every time the sizing exercise is performed, a history entry of the calculated size for each DBS Blade and the values of its sizing parameters shall be saved in the DSM database.

This information will be used for debugging and maintenance purpose.

The update command shall update the size of each database space according to the following rules:
- If the new size is equal or smaller than the existing size, the update command shall ignore the operation and inform user that the operation is terminated with no sizing update.
- If the new size is greater than the existing size, the update command shall add more database space chunks for each database space.

The update command shall use the sizing operation defined by the DBS Blade or DBS Blade group in order to calculate the new size of the database spaces. The value of sizing parameters shall be set either through the CLI or in the configuration file. The update command shall be able to overwrite the sizing operation when -size option is specified. The update command shall create a unique symbolic link name for each database chunk that it adds. For naming a chunk, the DSM utility shall use the name of the database space to which chunk belong and concatenate it with an integer number. The DSM utility shall maintain the link files of each application in ${LINKDIR}/<Application> directory. The update command shall use Informix "onspaces" command to add more database chunks. If there is a syntax error for an entry line in the DBS Blade configuration file, the update command shall raise "SyntaxBladeCfgFile" exception.

If the update command receive a DBS Blade or DBS Blade group as argument that are not registered yet, it shall raise "BladeNotExist" exception.

If the update command receive a database space number as argument that does not exist, it shall raise "DBSNotExist" exception.

If there is no value set for a required sizing parameter, the update command shall raise "NoSizeValue" exception. If the create command receive incorrect value type for a sizing parameter, it shall raise "InvalSizeValue" exception.

If the update command can not calculate the size of each database space using the DBS Blade sizing operation, it shall raise "BladeNotSized" exception.

If the update command can not create/maintain the symbolic link files, it shall raise "LinkFailed" exception.

If the update command can not create database spaces using Informix "onspaces" command, it shall raise "OnspacesFailed" exception.

When an exception is raised, all actions taken by the update command for updating the size of a database space is rolled back to a state as though the command was never issued for that database space.

After a successful operation, the update command shall inform user about the success of the operation.

For more information on the messages and exceptions refer to the "DSM utility Logging and Error-Handling" section.

**Return Values:** The update command shall return number of database spaces updated successfully.

The update command shall return negative values corresponding to the exception raised in case of failure.

### Delete Command

**Purpose:** The delete command is to delete the application-defined database spaces. If user does not need database spaces defined by a DBS Blade or DBS Blade group, he can delete them. Moreover, he will be able to delete each database space separately.

**Syntax:** The command line interface for the delete command shall provide the following syntax:
<TBD Choose between the two>
1. dsm_delete *<[DBS Blade*|*DBS Blade Group*|*database space number]>*
2. dsm delete *<[DBS Blade*|*DBS Blade Group*|*database space number]>*
*<DBS Blade>:* the name of a DBS Blade whose database spaces are deleted.
*<DBS Blade Group>:* the name of a DBS Blade group whose database spaces are deleted.
*<database space number>:* The unique number of a database space to be deleted.

### Examples:

### dsm_delete Base

**Description:** The delete command is an operational command. The delete command shall be able to delete the database spaces described by a DBS Blade or DBS Blade group. The delete command shall also be able to delete a specific database space using its unique identifier.

The delete command shall use Informix "onspaces" command to delete database spaces.

When a database space is deleted, all of its database chunks and their symbolic links shall also be removed. The link files reside in the ${LINKDIR}/<Application> directory.

The delete command shall update the DSM database with the free disk spaces. The two or more adjacent free spaces shall be merged and considered as a larger free disk space.

If the delete command receive a DBS Blade or DBS Blade group as argument that are not registered yet, it shall raise "BladeNotExist" exception.

If the delete command receive a database space number as argument that does not exist, it shall raise "DBSNotExist" exception.

If the delete command can not create/maintain the symbolic link files, it shall raise "LinkFailed" exception.

If the update command can not create database spaces using Informix "onspaces" command, it shall raise "OnspacesFailed" exception.

If the delete command can not update the DSM database with the free disk space information, it shall raise "DBSNotDeleted" exception.

When an exception is raised, all actions taken by the delete command for deleting a database space are rolled back to a state as though the command was never issued for that particular database space.

After a successful operation, the delete command shall inform user about the success of the operation.

For more information on the messages and exceptions refer to the "DSM utility Logging and Error-Handling" section.

**Return Values:** On a successful operation, the delete command shall return number of database spaces deleted successfully.

The delete command shall return negative values corresponding to the exception raised in case of failure.

### List Command

**Purpose:** The list command is used for acquiring detailed information about the application-defined DBS Blades, DBS Blade groups, database spaces, database chunks, and physical disks.

**Syntax:** The command line interface for the list command shall provide the following syntax:
<TBD Choose between the two>
3. dsm_list [-arg] [-b <*DBS Blade*|*DBS Blade Group*>] [-d <*Application*>] [-c <*Disk Path*>] [-s <*Database Space Number*>]
4. dsm list [-arg] [-b <*DBS Blade*|*DBS Blade Group*>] [-d <Application>] [-c <*Disk Path>*] [-s <*Database Space Number*>]
<*DBS Blade*>: the name of a DBS Blade.
*<DBS Blade Group>:* the name of a DBS Blade group.
*<Application>:* the name of an application for which physical disk(s) and DBS Blade(s) are allocated/registered.
*<Disk Path>:* The absolute pathname of a UFS file, or Unix raw partition on which the application database spaces can be allocated. It shall support maximum path length supported by Unix.
*<Database Space Number>:* The unique identifier of a database space.

### Examples:

dsm_list -r
dsm_list -b *Base*
dsm_list -d *Resolve*
dsm_list -c */dev/rdsk/c0t1d0s2*
dsm_list -s *25*

### Description:

The list command is an informational command. The list command provides information on the DBS Blades, DBS Blade groups, physical disks, database spaces, and database chunks. The list command shall provide the following options to the DSM administrator(s):
- -a option: shall list the available DBS Blades installed on the system. The DBS Blade information are:
   - DBS Blade name as defined in the DBS Blade description file
   - DBS Blade version as defined in the DBS Blade description file.
   - DBS Blade description as defined in the DBS Blade description file.
   - DBS Blade type as defined in the DBS Blade description file.
- -r option: shall list DBS Blades registered with DSM utility. The following detailed information shall be listed for each DBS Blade:
   - DBS Blade name
   - DBS Blade version
   - DBS Blade description
   - DBS Blade type
   - DBS Blade application name
   - DBS Blade group if grouped
   - DBS Blade size if sized
- -g option: shall list DBS Blade groups registered with DSM utility. The following detailed information shall be listed for each DBS Blade group:
   - DBS Blade group
   - DBS Blade name that belongs to the group.
- -b option: shall list all database spaces belonging to a DBS Blade or a DBS Blade group. The following detailed information shall be listed for each specified DBS Blade/DBS Blade group:
   - Database space number
   - Database space name
   - Database space type
   - Database space size
- -d option: shall list all physical disks configured in DSM utility for a specific application. The following detailed information shall be listed for the specified application:
   - Disk pathname
   - Disk type
   - Disk total size
   - Disk used size
- -c option: shall list all database chunks configured on a specific physical disk. The following detailed information shall be listed for the specified disk:
   - Chunk symbolic pathname
   - Chunk size
   - Chunk offset
   - Chunk database space to which it belongs.
- -s option: shall list all database chunks configured for a specific database space. The following detailed information shall be listed for the specified database space:
   - Chunk symbolic pathname
   - Chunk size
   - Chunk offset
   - Chunk physical disk where it resides

All options shall be used exclusively.

If the list command receive a DBS Blade or DBS Blade group as argument that are not registered yet, it shall raise "BladeNotExist" exception.

If the list command receives an application name as argument that has never configured, it shall raise "AppNotExist" exception.

If the list command receives a database space number as argument that does not exist, it shall raise "DBSNotExist" exception.

If the list command receives a disk pathname as argument that has never configured, it shall raise "DiskNotConfigured" exception.

If the list command can not read the DBS Blade description files in the ${DSMHOME}/extend directory to find the available DBS Blades, it shall raise "NoBladeDescFile" exception.

If the list command can not recognize the syntax of the DBS Blade description file, it shall raise "SyntaxBladeDescFile" exception.

If the list command fails in querying the DSM and "sysmaster" databases, it shall raise "ListFailed" exception.

When an exception is raised, all actions taken by the list command for listing information are rolled back to a state as though the command was never issued for that particular database space.

After a successful operation, the list command shall inform user about the success of the operation.

For more information on the messages and exceptions refer to the "DSM utility Logging and Error-Handling" section.

**Return Values:** On a successful operation, the list command shall return 0.

The list command shall return negative values corresponding to the exception raised in case of failure.

### DSM utility Logging and Error Handling

All DSM logging shall be handled by the Resolve Log utility [1]. The log files for DSM utility shall be called "dsm.[0,1,2,...]". The following table indicates the severity levels that shall be supported by the DSM utility. Each entry in the log file complies with the format as specified in [1].

**Table**

| **Error! No text of specified style in document.**-1 -DSM Logging Severity values (increasing order of severity) | | |
|---|---|---|
| **Constant** | **String** | **Purpose** |
| E_INFO | Info | Informational messages |
| E_WARNING | Warning | Minor errors |
| E_SERIOUS | Serious | Major errors |
| E_FATAL | Fatal | Fatal errors (may be written to /dev/console) |
| E_OPERATOR | Operator | Conditions requiring operator intervention (may be written to /dev/console, or mailed to operator) |

The DSM for specific error conditions shall raise the following exceptions:

**Table -**

| DSM exceptions | | | |
|---|---|---|---|
| **Exception** | **Error Level** | **Command(s)** | **Description** |
| NoDBConnect | E_SERIOUS | all | Error was encountered when attempting to log into the DSM and SYSMASTER databases. |
| NoCfgFile | E_SERIOUS | all | The DSM configuration file could not be found or read. |
| NoValidUser | E_WARNING | all | Not a valid user attempted to use DSM commands. |
| InvalidSyntax | E_WARNING | All | Syntax error occurred in the command line interface. |
| NoBladeCfgFile | E_SERIOUS | Register | The DBS Blade configuration file is not found or the DSM utility can not read the file. |
| NoBladeDescFile | E_SERIOUS | Register, list | The DBS Blade configuration file is not found or the DSM utility can not read the file. |
| NoBladeOperFile | E_SERIOUS | Register | The DBS Blade configuration file is not found or the DSM utility can not read the file. |
| SyntaxBladeDescFile | E_SERIOUS | Register, list | Syntax error discovered while reading the DBS Blade description file. |
| SyntaxBladeOperFile | E_SERIOUS | register | Syntax error discovered while reading the DBS Blade operation file. |
| SyntaxBladeCfgFile E_SERIOUS | | Size, create, | Syntax error discovered |
| | | update, delete | while reading the DBS Blade configuration file. |
| BladeOperNotFound | E_SERIOUS | register | The information about the operation routines in DBS Blade description file and operation files do not match each other. |
| OperNotLoaded | E_SERIOUS | register | The DBS Blade operation routines can not be loaded in the DSM database. |
| DescNotLoaded | E_SERIOUS | register | The DBS Blade description information can not be stored in the DSM database. |
| BladeAlrdyRegisered | E_WARNING | register | A version of the DBS Blade has already been registered with the DSM utility. |
| BladeInUse | E_WARNING | unregister | When a DBS Blade is in use and can not be unregistered. |
| DescNotUnLoaded | E_SERIOUS | unregister | When a DBS Blade is expected to unregister, but its descriptions can not be removed from the DSM database. |
| OperNotUnLoaded | E_SERIOUS | unregister | When a DBS Blade is expected to unregister, but its operation routines can not be removed from the database server. |
| SyntaxDiskCfgFile | E_SERIOUS | Add-disk, delete- | Syntax error discovered |
| | | disk, replace-disk | while reading the physical disk configuration file. |
| InvalidPathName | E_SERIOUS | Add-disk, delete-disk, replace-disk | The absolute pathname to the physical disk is invalid. |
| NoDiskCfgFile | E_WARNING | Add-disk, delete-disk, replace-disk | When the disk configuration file does not exist, or does not the appropriate read/write permissions. |
| NotEnoughSpace | E_SERIOUS | Add-disk, replace-disk, create, update | When the DSM can allocate the disk space with the specified size. |
| InvalidDiskType | E_SERIOUS | Add-disk, replace-disk | When the type of the physical disk is not set properly. |
| DiskInUse | E_SERIOUS | Delete-disk | The disk space is used by an application database space. |
| DiskNotAdded | E_SERIOUS | Add-disk | Disk information can not be added to the DSM database. |
| DiskNotDeleted | E_SERIOUS | Delete-disk | Disk information can not be deleted from the DSM database. |
| SizeNotMatched | E_SERIOUS | Replace-disk | The size of the old disk is greater than the size of the new disk. |
| DiskNotReplaced | E_SERIOUS | Replace-disk | Disk information can not be updated in the DSM database. |
| DiskAlrdyConfigured | E_WARNING | Add-disk, replace-disk | Disk is already configured for being used by the DSM utility. |
| DiskNotConfigured | E_WARNING | Delete-disk, list | Disk is not configured for being used b the DSM utility. |
| BladeNotExist | E_WARNING | Group, register, sync, size, create, update, delete, list | DBS Blade has not been registered with the DSM utility yet. |
| GroupAlrdyConfigured | E_WARNING | group | DBS Blade group has already been configured. |
| BladeNotUnregistered | E_SERIOUS | unregister | DBS Blade information can not be removed from DSM database. |
| BladeNotRegistered | E_SERIOUS | register | DBS Blade can not be inserted in the DSM. |
| GroupNotConfigured | E_SERIOUS | Group | DBS Blade group information can not be configured in the DSM database. |
| DBSNotExist | E_WARNING | Sync, update, delete, list | When the specified database space does not exist. |
| DBSInfoIncomplete | E_SERIOUS | sync | DSM utility can not obtain all information pertaining to a database space. |
| DBSNotSync | E_SERIOUS | sync | Database space information can not be updated in the DSM database. |
| NoSizeValue | E_WARNING | Size, create, update | When there is no value set for a sizing parameter |
| InvalSizeValue | E_WARNING | Size, create, update | The value of a sizing parameter does not have a correct value. |
| BladeNotSized | E_SERIOUS | Size, create, update | The sizing operation can not calculate the size of a DBS Blade or DBS Blade group. |
| LinkFailed | E_SERIOUS | Replace-disk, create, update, delete | DSM utility can not maintain database chunk symbolic links. |
| OnspacesFailed | E_SERIOUS | Create, update, delete | DSM utility failed on Informix onspaces command. |
| NoNameValue | E_WARNING | create | When there is no value set for a naming parameter |
| InvalNameValue | E_WARNING | create | The value of a naming parameter does not have a correct value. |
| BladeNotNamed | E_SERIOUS | create | The naming operation can not a database space of a DBS Blade or DBS Blade group. |
| DBSNotDeleted | E_SERIOUS | delete | When a database spaces information can not be updated in the DSM database after a delete command. |
| AppNotExist | E_WARNING | List | DSM utility does not recognized the application name. |
| ListFailed | E_SERIOUS | List | DSM utility can not query DSM and sysmaster databases successfully. |
| NoCountValue | E_WARNING | Size, create | When there is no value set for a required counting parameter |
| InvalCountValue | E_WARNING | Size, create | The value of a counting parameter does not have a correct value. |
| BladeNotCounted | E_WARNING | Create, size | The counting operation can not determine the number of database spaces. |
| | | | |
| | | | |
| | | | |

The DSM for specific conditions shall issue the following messages:

| - DSM Messages | | | |
|---|---|---|---|
| **Message** | **Error Level** | **Command(s)** | **Description** |
| <command> was successful. | E_INFO | all | When an operation was successfully done. <command> is the name of the DSM command executed by the user. |
| <command> operation is requested. | E_INFO | all | When a user invokes an operation through the DSM command line interface. <command> is the name of the DSM command executed by the user. |
| <Disk> at <line> in <Disk Configuration File> ignored. | E_WARNING | Add-disk, delete-disk, replace-disk | When an entry line in the physical disk configuration file is ignored. |
| <Command> is terminated with no change in the DSM configuration. | E_INFO | update | When a command such as Update does not update the database spaces. |
| | | | |

### Layout of chunks on physical disks

The DSM utility shall allocate chunks for each database space it creates. The layout of chunks on the physical disk shall at least support Chunk Horizontal Layout (CHL) algorithm. Figure 3-9 demonstrates the CHL algorithm.

In the CHL algorithm, The DSM utility shall create all chunks sequentially starting from the first configured disks to the last configured disk. When the space on the first disk is used, the DSM utility shall use the space on the second configured disk and so on. The DSM utility shall leave some disk space at the end of each configured disk. This space is called Disk Grace Margin and is to ensure that chunks will never expand beyond the disk limit.

The DSM utility shall keep the physical disk space usage information (used and available spaces on each disk) up to date in the DSM database.

The DSM utility shall leave 8 Kbytes free space at the beginning of each disk whose type is "r".

The DSM utility shall follow the following rules for deciding on the number of chunks required by a database space of size X:
- Rule 1: If X =< 2Gbytes, allocate only one chunk with size X.
- Rule 2: If 2Gbytes < X =< 4Gbytes, allocate two chunks each with size X/2.
- Rule 3: If X > 4Gbytes, allocate chunks each 2Gbytes util the remainder reaches the limit of 4Gbytes or smaller, then follow Rule 2 if 2Gbytes < X =< 4Gbytes condition is set or Rule 1 if X =< 2Gbytes is set.

The DSM utility shall locate a continuous space on a physical disk for each chunk. This means that once the size of a chunk is determined according to the Rule 1 to 3 above, the chunk will never be broken down to the smaller pieces. The DSM utility shall use the CHL algorithm for searching an available space for a chunk.

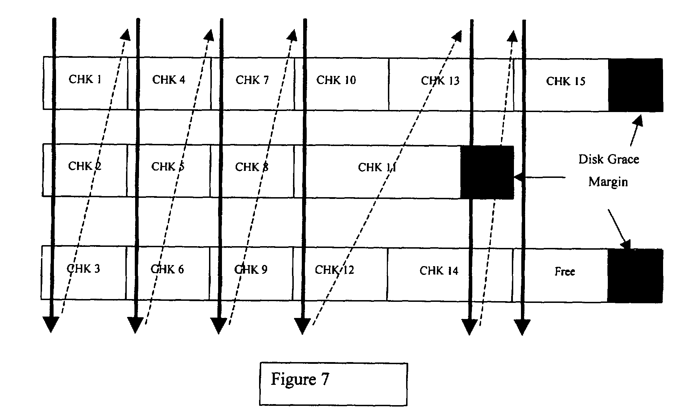

The design of DSM utility shall be done in a way that it will be able to support more sophisticated algorithm in the future release. The Chunk Vertical Layout (CVL) is one of these algorithms. The Figure 7 demonstrates the CVL algorithm.

In this algorithm the chunks all laid out in a vertical manner. The first chunk will be located on the first disk; the second chunk will be located on the second disk, and so on. When all chunks were hit once, the DSM utility will start from the first disk again. CVL algorithm provides a better performance than the CHL.

If a database chunk is removed, its allocated space shall be returned as free space to the physical disk. The adjacent free spaces shall be merged and considered as one larger free space.

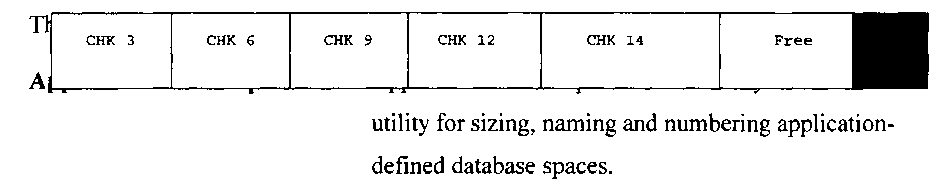

- **ATM Facility**: ATM links or pipes are a managed object type supported by Resolve.
- **ATM PVC**: ATM Permanent Virtual Circuit is a managed object type supported by Resolve.
- **ATM**: Asynchronous Transfer Mode is a networking technology for transmitting user's data with high quality and speed over wired communication networks.
- **CLI**: Command Line Interface
- **Database Space Type**: A database space type is the same as a DBS Blade.
- **DBS Blade group**: A group of DBS Blades that follow a similar pattern for naming, sizing and numbering. The main purpose of grouping is to prevent the repetition of DSM commands on each DBS Blade.
- **DBS Blade**: An application-defined module that has the expertise to name, size and number application-defined database spaces. A DBS Blade is analogous to a database space type defined by an application.
- **Domain-defined parameter**: Domain-defined parameters are the same as application-define parameters.
- **DSM Agent**: an agent for database space management tasks. The agent performs the administrator's tasks with regard to the Resolve database space management. The agent can be an install script, or a program that interfaces with the DSM utility through its CLI on behalf of the administrator.
- **DSM**: Database Space Management is a trademark in Resolve.
- **FR Facility**: FR links or pipes are a managed object type supported by Resolve.
- **FR PVC**: Frame Relay Permanent Virtual Circuit is a managed object type supported by Resolve.
- **FRUNI**: Frame Relay User Network Interface is a managed object type supported by Resolve. It is analogous to Frame Relay Facility in Resolve.
- **FR**: Frame Relay is a networking technology for transmitting user's data over wired communication networks.
- **Informix**: A database management system used in Resolve to store and manage its persistence data structures.
- **NetworkWare**: A suit of CrossKeys applications in network management domain that enhances 46020 Network Management capabilities.
- **OnLine**: an acronym for Informix OnLine Dynamic Server
- **Resolve Base Package**: A logical package required for the basic operation of Resolve. Resolve base package includes all DBS Blades required for creating and maintaining Resolve base data. It can consist of one or more Solaris packages.
- **Resolve QOS package**: A logical package required for the operation of Resolve quality of service functionality. Resolve QOS package includes DBS Blades required for creating and maintaining Resolve quality of services data. It can consist of one or more Solaris packages.
- **Resolve resource package**: A logical package required for the operation of each supported resource in Resolve. Resolve resource packages include DBS Blades required for creating and maintaining Resolve resource data. It can consist of one or more Solaris packages.
- **Resource**: an instance of a managed object type is a resource managed by Resolve.
- **SPL**: a Stored Procedure Language defined by Informix Database Management System. It enables the user to write user-defined function and to expand the normal SQL capability.
- **TDM Facility**: TDM links or pipes are a managed object type supported by Resolve.
- **TDM**: Time Division Multiplexing is a networking technology for transmitting user's data over wired communication networks.

## Claims

1. A database storage manager (DSM) utility of updating database applications using Informix for database storage management, said utility encompassing and enhancing Informix database storage management functionality.

2. A database storage manager as claimed in claim 1, wherein said utility functions as a middleware utility that interfaces with an application administrator at one end and Informix and physical disks from another end.

3. A database storage manager as claimed in claim 2, wherein said utility includes a module that permits said utility to perform space sizing and numbering from an application point of view.

4. A database storage manager as claimed in claim 3, wherein said module is divided into a description section, a parameter section, and an operation section.

5. A database storage manager as claimed in claim 3, wherein said module describes an application database space in terms of:
• Sizing Operation: the way in which each instance of a database space type is sized.
• Sizing Configurable Parameter: the configurable parameter required for sizing each instance of a database space type.
• Naming Operation: the way in which each instance of a database space type is named.
• Naming Configurable Parameter: the configurable parameter used in naming each instance of a database space type.
• Counting Operation: the way in which the number of database space instances of each database space type is determined.
• Counting Configurable Parameters: the configurable parameter used in determining the number of database space instances for each database space type.

6. A database storage manager as claimed in claim 5, wherein said utility has a command line interface. that provides a well-defined interface to manage database spaces with no required back ground in Database Management System.

7. A database storage manager as claimed in claim 1, wherein said utility hides details pertaining to database spaces and disk management.

8. A database storage manager as claimed in claim 1, wherein said utility is arranged to perform on-the-fly the database space sizing, allocation, de-allocation and update based a series of application (user) defined parameters such as number of network objects.

9. A database storage manager as claimed in claim 1, comprising a plurality of logical units of storage and a plurality of physical units of storage.

10. A database storage manager as claimed in claim 9, wherein said physical units are divided into chunks.

11. A method of updating a database application comprising providing a utility using Informix for database storage management, said utility including a module that contains the knowledge required for calculating the size and naming an application database space.

12. A method as claimed in claim 11, wherein said module is divided into a description section, a parameter section and an operating section.

13. A method as claimed in claim 11, wherein said utility performs space sizing and numbering from an application point of view.

14. A method as claimed in claim 13, wherein said module describes an application database space in terms of:
• Sizing Operation: the way in which each instance of a database space type is sized.
• Sizing Configurable Parameter: the configurable parameter required for sizing each instance of a database space type.
• Naming Operation: the way in which each instance of a database space type is named.
• Naming Configurable Parameter: the configurable parameter used in naming each instance of a database space type.
• Counting Operation: the way in which the number of database space instances of each database space type is determined.
• Counting Configurable Parameters: the configurable parameter used in determining the number of database space instances for each database space type.

15. A method as claimed in claim 14, wherein said utility has a command line interface.
